# EUROPEAN PATENT APPLICATION

(11) **EP 4 477 345 A1**
(43) Date of publication of application: **18.12.2024**
(21) Application number: 22940205.2
(22) Date of filing: 28.04.2022
(51) Int. Cl.: B23K 20/12

(54) **FRICTION STIR WELDING TOOL, FRICTION STIR WELDING APPARATUS, AND FRICTION STIR WELDING METHOD**

(71) Applicant: Yamazaki Mazak Corporation, Niwa-gun, Aichi 480-0197 (JP)
(72) Inventor: MATSUBARA, Eiji, Niwa-gun, Aichi 480-0197 (JP); MINATANI, Masayasu, Niwa-gun, Aichi 480-0197 (JP); NIWA, Kentaro, Niwa-gun, Aichi 480-0197 (JP)
(74) Representative: TBK
(86) International application number: PCT/JP2022/019219
(87) International publication number: WO 2023/209928

(57) **Abstract**

A friction stir welding tool includes: a shoulder including a shoulder surface to be in contact with a workpiece; and a probe that protrudes from the shoulder and that is rotatable about a first axis. On an outer circumferential surface of the probe, a spiral groove portion and a chamfered portion are alternately formed in a circumferential direction of the probe. In a case where a rotation direction of the probe is defined as a first rotation direction, the spiral groove portion includes a plurality of grooves that approach the shoulder surface in the first rotation direction. An inclined face is formed on a part of an end face of a tip end portion of the probe, the inclined face being continuous with the chamfered portion and approaching the shoulder surface in the first rotation direction.

## Description

### Technical Field

The present invention relates to a friction stir welding tool, a friction stir welding apparatus, and a friction stir welding method.

### Background Art

Friction stir welding is known. In the friction stir welding, by rotating a tool relative to two workpieces to be welded together, such two workpieces are welded together. More specifically, frictional heat generated by the rotation of the tool softens parts to be welded of the two workpieces. The softened material flows around the tool in accordance with the rotation of the tool. The material that flows around the tool hardens, and then the two workpieces are welded together.

As a related technique, Patent Literature 1 discloses a friction stir welding apparatus for overlay welding. The friction stir welding apparatus described in Patent Literature 1 includes a rotor including a shoulder portion, and a probe portion provided to protrude from the shoulder portion and disposed concentrically with the axis of the rotor. A spiral groove portion is formed on a circumferential surface of the probe portion from a tip end portion of the probe portion toward the shoulder portion. In addition, the groove of the spiral groove portion is formed such that the depth of the groove gradually decreases from the tip end portion of the probe portion toward the shoulder portion.

### Citation List

### Patent Literature

PTL1: JP 2011-92971 A

### Summary of Invention

### Technical Problem

It is an object of the present invention to provide a friction stir welding tool, a friction stir welding apparatus, and a friction stir welding method that are capable of guiding a softened material from a chamfered portion to an inclined face and guiding the softened material that has been guided to the inclined face downward.

### Solution to Problem

According to some embodiments of the present invention, a friction stir welding tool includes: a shoulder including a shoulder surface to be in contact with a workpiece; and a probe that protrudes from the shoulder and that is rotatable about a first axis. On an outer circumferential surface of the probe, a spiral groove portion and a chamfered portion are alternately formed in a circumferential direction of the probe. In a case where a rotation direction of the probe is defined as a first rotation direction, the spiral groove portion includes a plurality of grooves that approach the shoulder surface in the first rotation direction. An inclined face is formed on a part of an end face of a tip end portion of the probe, the inclined face being continuous with the chamfered portion and approaching the shoulder surface in the first rotation direction.

According to some embodiments of the present invention, a friction stir welding apparatus includes: a friction stir welding tool; a workpiece support member configured to support a workpiece; a tool holding member configured to hold the friction stir welding tool; a first drive configured to move the tool holding member relative to the workpiece support member; a second drive configured to drive a probe of the friction stir welding tool to rotate about a first axis; and a controller configured to control the first drive and the second drive. The friction stir welding tool includes: a shoulder including a shoulder surface to be in contact with the workpiece; and the probe that protrudes from the shoulder and that is rotatable about the first axis. On an outer circumferential surface of the probe, a spiral groove portion and a chamfered portion are alternately formed in a circumferential direction of the probe. In a case where a rotation direction of the probe is defined as a first rotation direction, the spiral groove portion includes a plurality of grooves that approach the shoulder surface in the first rotation direction. An inclined face is formed on a part of an end face of a tip end portion of the probe, the inclined face being continuous with the chamfered portion and approaching the shoulder surface in the first rotation direction.

According to some embodiments of the present invention, a friction stir welding method includes: a step of preparing a workpiece including a first workpiece and a second workpiece; a step of inserting a probe of a friction stir welding tool into the workpiece, by moving the friction stir welding tool relative to the workpiece; a step of moving the friction stir welding tool relative to the workpiece to bring a shoulder of the friction stir welding tool into contact with an upper surface of the workpiece; and a step of subjecting the first workpiece and the second workpiece to friction stir welding, by rotating the probe inserted into the workpiece in a first rotation direction about a first axis. The step of subjecting the first workpiece and the second workpiece to the friction stir welding includes: forming a softened material from the workpiece with frictional heat generated by relative rotation between the probe and the workpiece; causing, by a plurality of grooves of a spiral groove portion formed on an outer circumferential surface of the probe, the softened material to flow downward; causing, by a chamfered portion formed on the outer circumferential surface of the probe, the softened material to flow in the first rotation direction about the first axis; guiding the softened material from the chamfered portion to an inclined face formed in a part of an end face of a tip end portion of the probe; and causing, by the inclined face, the softened material to flow downward.

### Effects of Invention

The present invention provides a friction stir welding tool, a friction stir welding apparatus, and a friction stir welding method that are capable of guiding a softened material from a chamfered portion to an inclined face and guiding the softened material that has been guided to the inclined face downward.

### Brief Description of Drawings

[FIG. 1] FIG. 1 is a perspective view of a friction stir welding tool according to a first embodiment, schematically illustrating the friction stir welding tool.
[FIG. 2] FIG. 2 is a perspective view of a part of the friction stir welding tool according to the first embodiment, schematically illustrating the friction stir welding tool.
[FIG. 3] FIG. 3 is a side view of the friction stir welding tool according to first embodiment, schematically illustrating a situation in which friction stir welding is performed using the friction stir welding tool.
[FIG. 4] FIG. 4 is a cross-sectional view of a friction stir welding tool in a comparative example, schematically illustrating a situation in which the friction stir welding is performed using the friction stir welding tool in the comparative example.
[FIG. 5] FIG. 5 is a perspective view of the friction stir welding tool according to the first embodiment, schematically illustrating a situation in which the friction stir welding tool is held by a tool holding member.
[FIG. 6] FIG. 6 is a bottom view of the friction stir welding tool according to the first embodiment, schematically illustrating the friction stir welding tool.
[FIG. 7] FIG. 7 is a perspective view of a part of the friction stir welding tool according to the first embodiment, schematically illustrating the friction stir welding tool.
[FIG. 8] FIG. 8 is a side view of a part of the friction stir welding tool according to the first embodiment, schematically illustrating the friction stir welding tool.
[FIG. 9] FIG. 9 is a perspective view of a part of the friction stir welding tool according to the first embodiment, schematically illustrating the friction stir welding tool.
[FIG. 10] FIG. 10 is a perspective view of a part of the friction stir welding tool according to the first embodiment, schematically illustrating the friction stir welding tool.
[FIG. 11] FIG. 11 is a side view of a part of the friction stir welding tool according to the first embodiment, schematically illustrating the friction stir welding tool.
[FIG. 12] FIG. 12 is a side view of a part of the friction stir welding tool according to the first embodiment, schematically illustrating the friction stir welding tool.
[FIG. 13] FIG. 13 is a bottom view of a part of the friction stir welding tool according to the first embodiment, schematically illustrating the friction stir welding tool.
[FIG. 14] FIG. 14 is a bottom view of a part of the friction stir welding tool according to the first embodiment, schematically illustrating the friction stir welding tool.
[FIG. 15] FIG. 15 is a bottom view of a part of a friction stir welding tool according to a first modification of the first embodiment, schematically illustrating the friction stir welding tool.
[FIG. 16] FIG. 16 is a perspective view of a part of a friction stir welding tool according to a second modification of the first embodiment, schematically illustrating the friction stir welding tool.
[FIG. 17] FIG. 17 is a side view of a part of the friction stir welding tool according to the second modification of the first embodiment, schematically illustrating the friction stir welding tool.
[FIG. 18] FIG. 18 is a perspective view of a part of a friction stir welding tool according to a third modification of the first embodiment, schematically illustrating the friction stir welding tool.
[FIG. 19] FIG. 19 is a side view of a part of the friction stir welding tool according to the third modification of the first embodiment, schematically illustrating the friction stir welding tool.
[FIG. 20] FIG. 20 is a perspective view of a part of a friction stir welding tool according to a fourth modification of the first embodiment, schematically illustrating the friction stir welding tool.
[FIG. 21] FIG. 21 is a side view of a part of the friction stir welding tool according to the fourth modification of the first embodiment, schematically illustrating the friction stir welding tool.
[FIG. 22] FIG. 22 is a perspective view of a part of a friction stir welding tool according to a fifth modification of the first embodiment, schematically illustrating the friction stir welding tool.
[FIG. 23] FIG. 23 is a side view of a part of the friction stir welding tool according to the fifth modification of the first embodiment, schematically illustrating the friction stir welding tool.
[FIG. 24] FIG. 24 is a side view of the friction stir welding tool according to the first embodiment, schematically illustrating a situation in which the friction stir welding is performed using the friction stir welding tool.
[FIG. 25] FIG. 25 is a diagram of a friction stir welding apparatus according to a second embodiment, schematically illustrating the friction stir welding apparatus.
[FIG. 26] FIG. 26 is a flowchart of an example of a friction stir welding method according to an embodiment.
[FIG. 27] FIG. 27 is a flowchart of an example of a plurality of sub-steps included in a welding step.

### Description of Embodiments

Hereinafter, by referring to the drawings, a friction stir welding tool 1, a friction stir welding apparatus 100, and a friction stir welding method according to embodiments will be described. It is to be noted that in the following description of the embodiments, identical reference numerals are used to denote identical portions, members, or components having identical functions, and redundant description of identical portions, members, or components will be omitted.

### (Definitions of Directions)

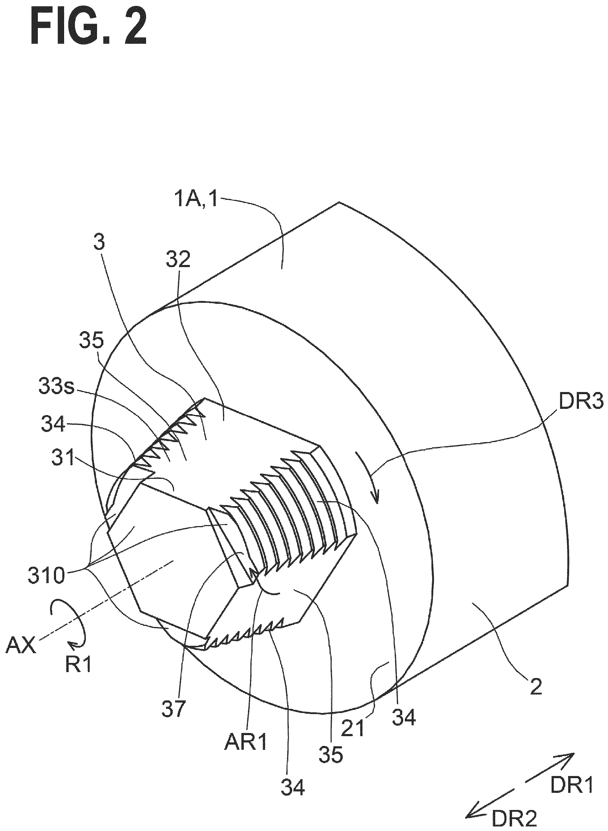

In this specification, a direction from a tip end portion 31 of a probe 3 toward a base end portion 32 of the probe 3 is defined as a first direction *DR1* (see FIG. 2 or the like). In this specification, a direction opposite to the first direction *DR1* is defined as a second direction *DR2.* The first direction *DR1* is defined herein as "upward" and the second direction *DR2* is defined as "downward".

### (First Embodiment)

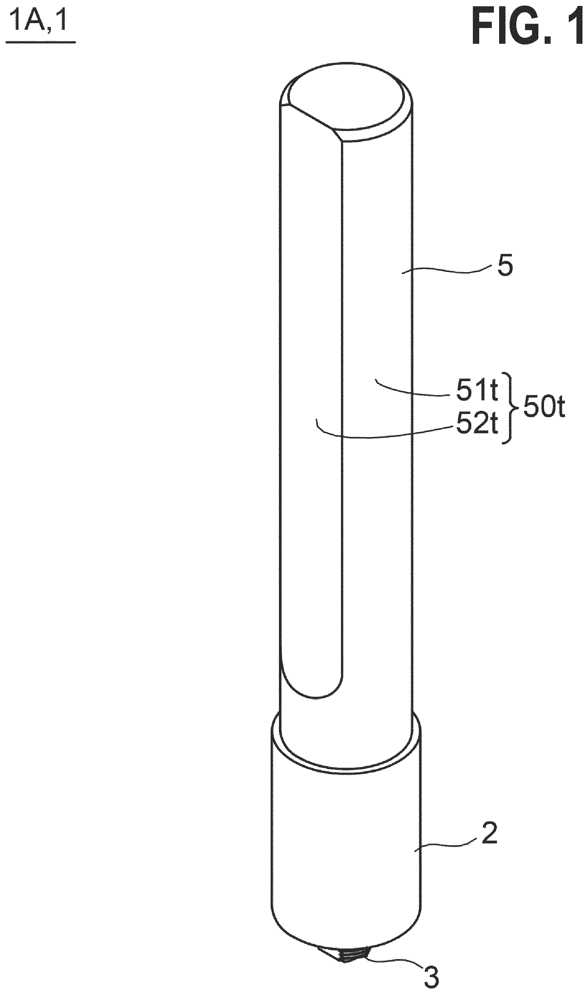

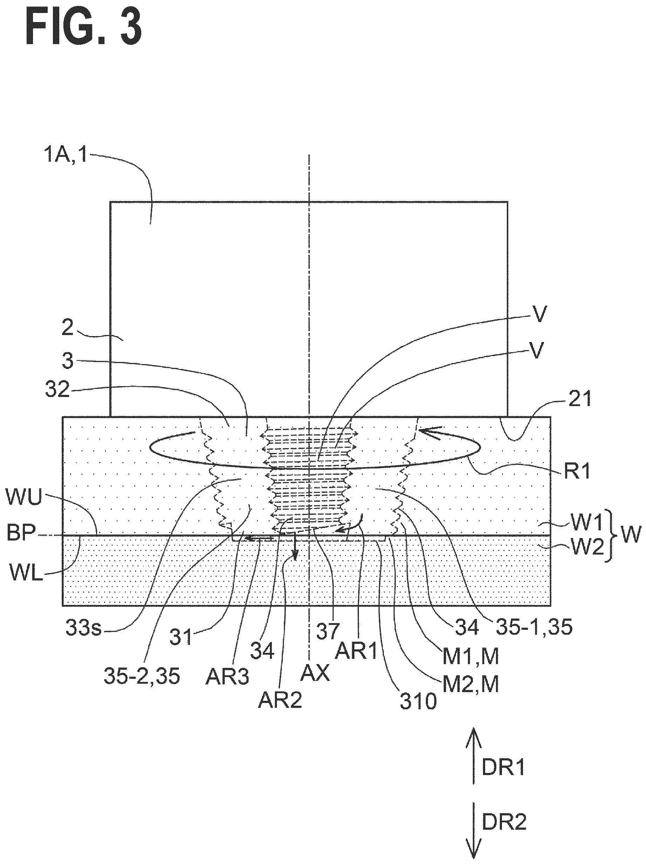

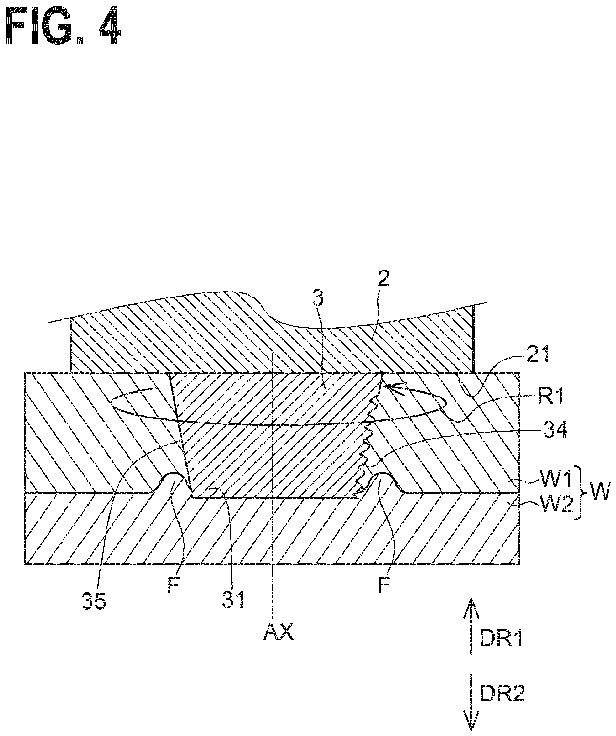

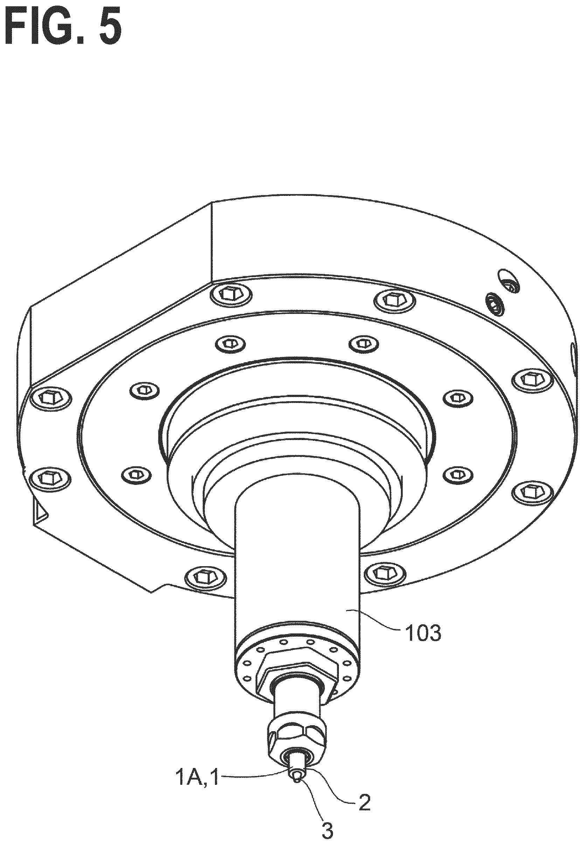

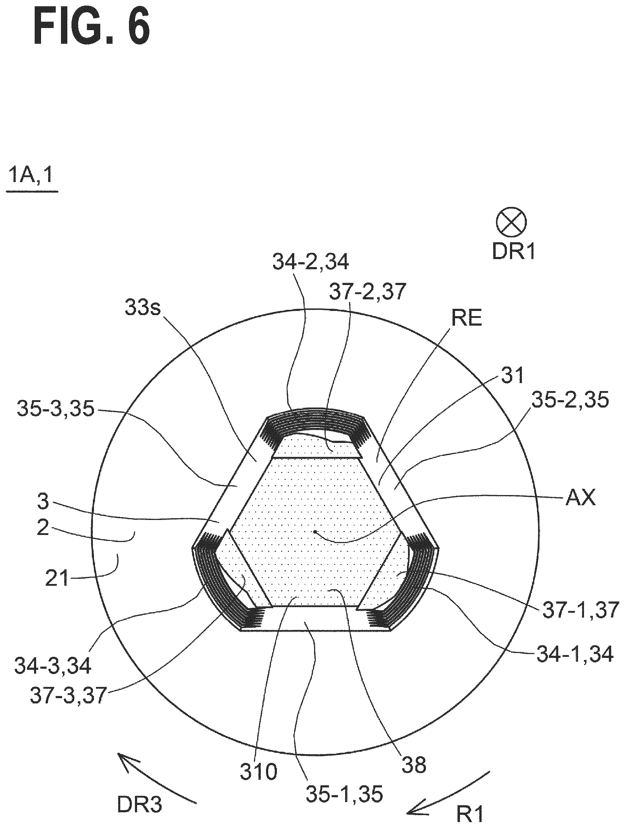

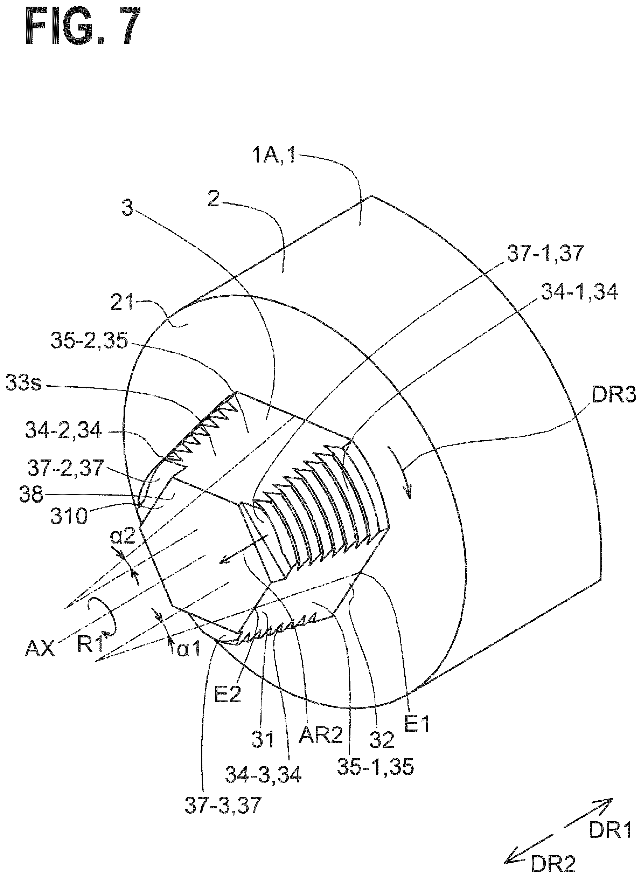

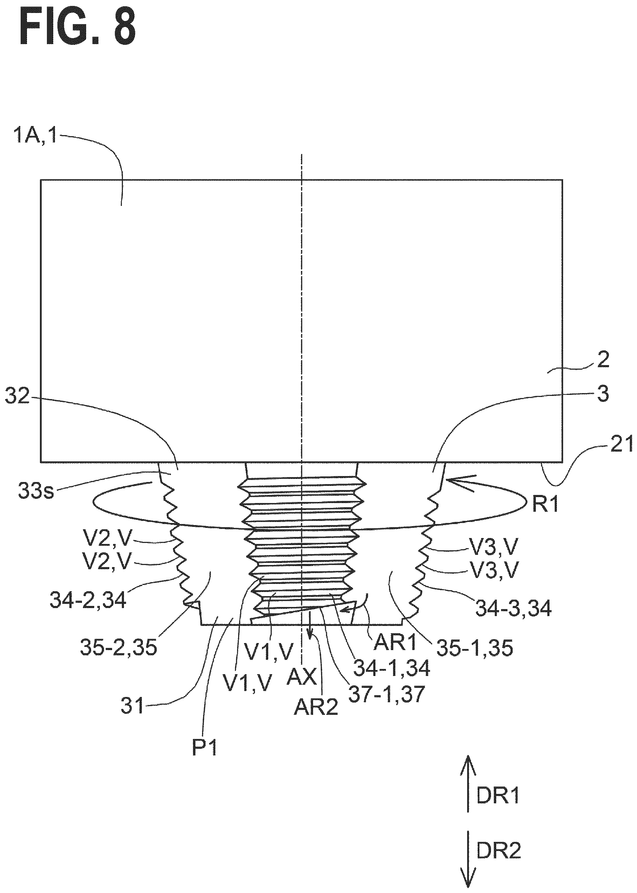

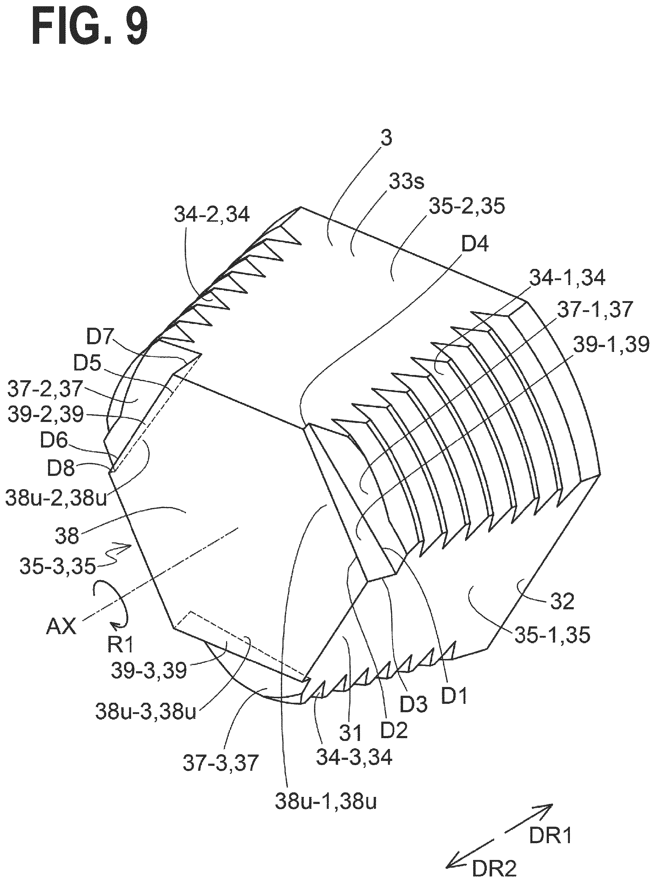

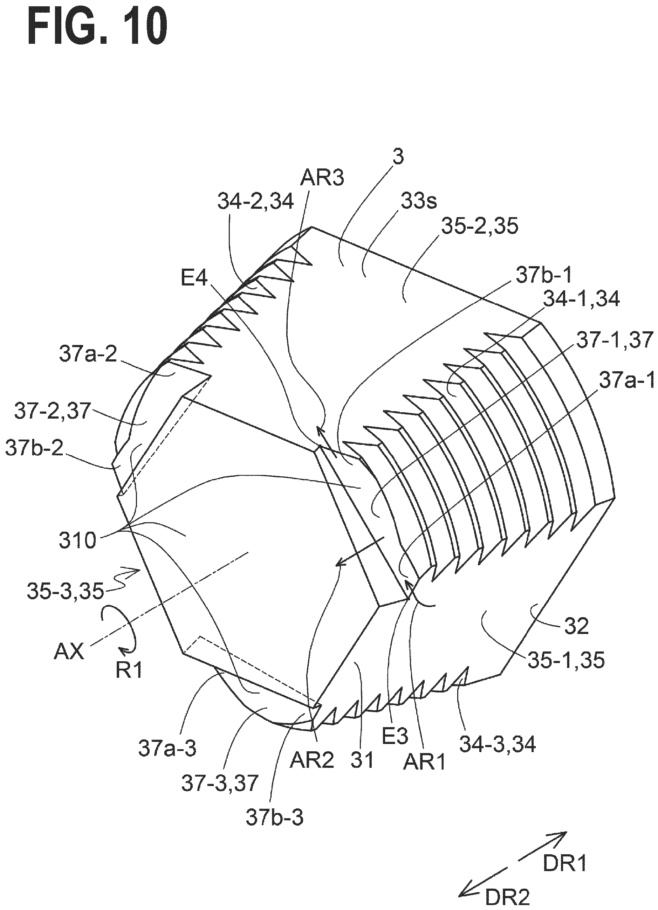

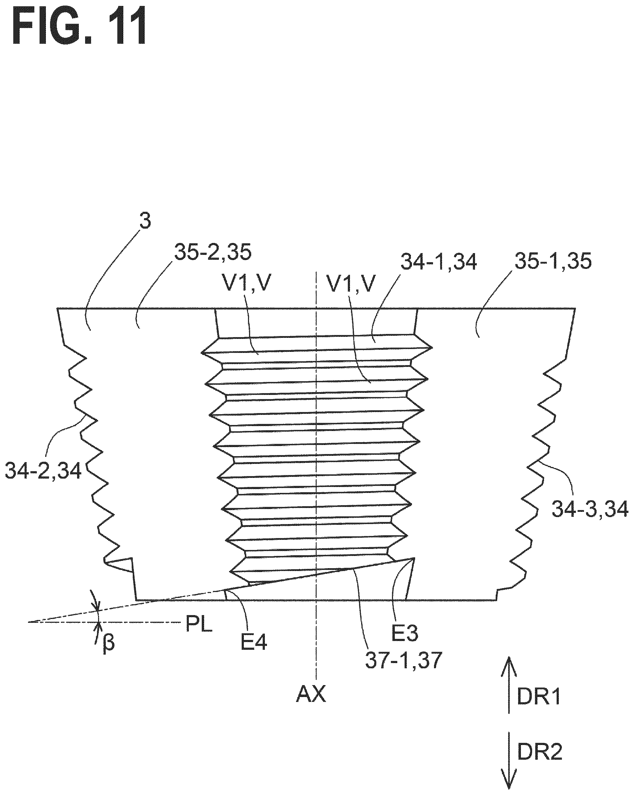

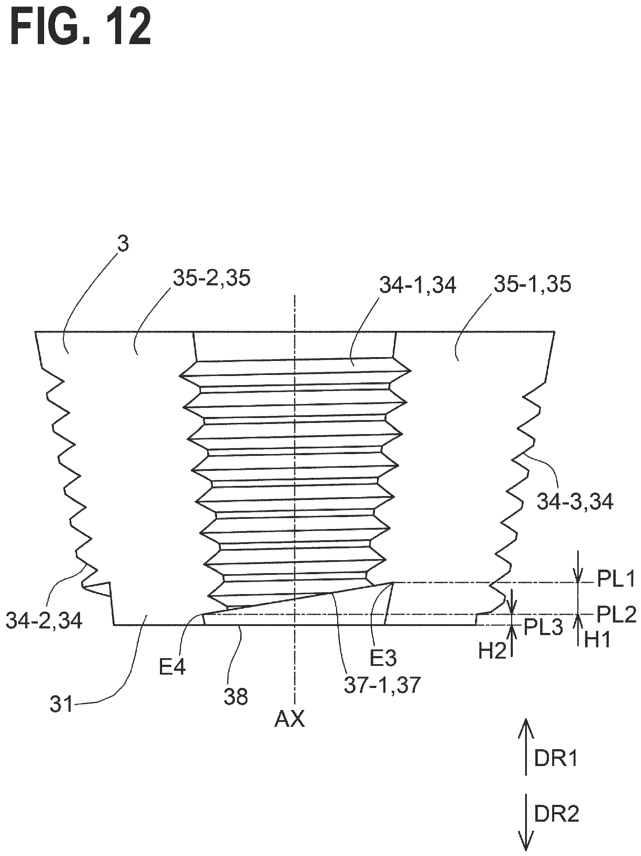

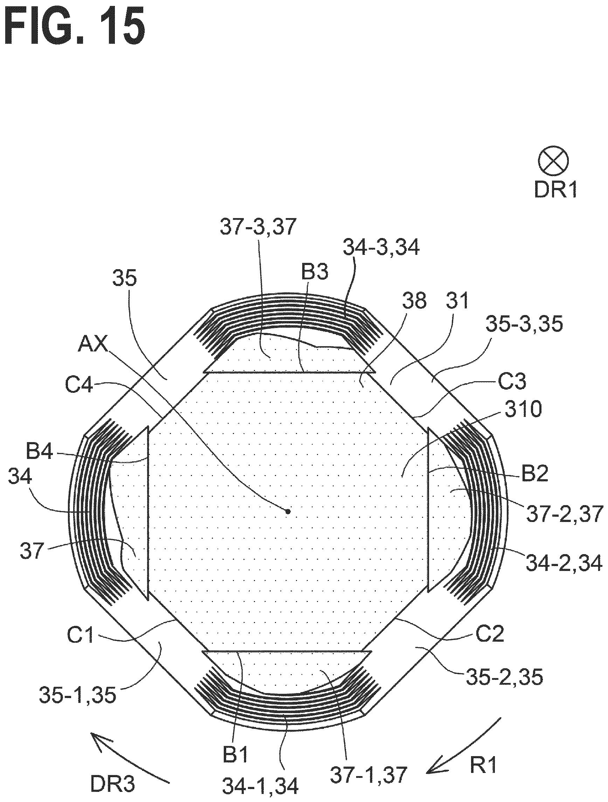

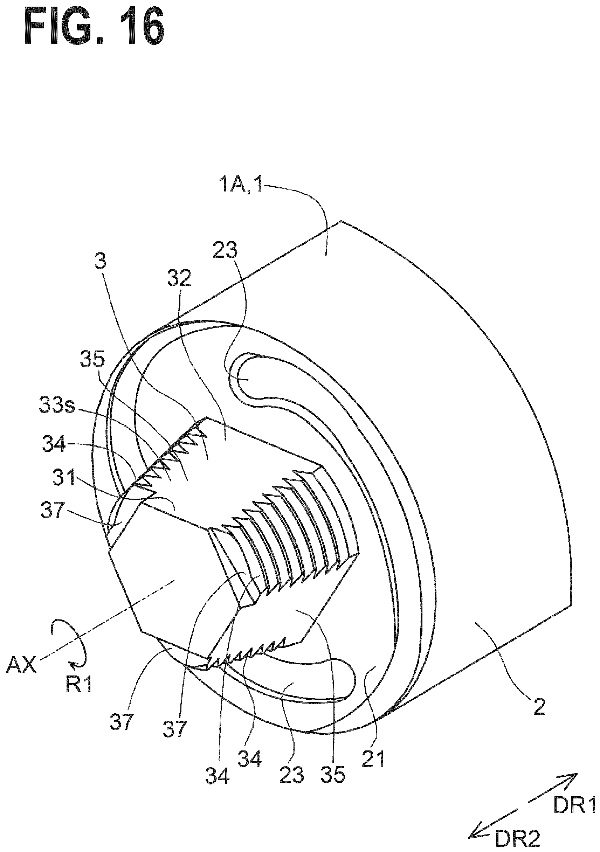

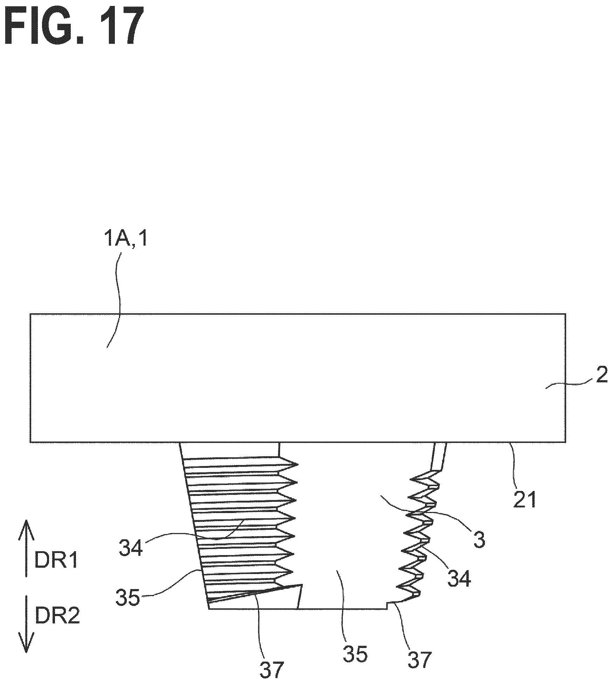

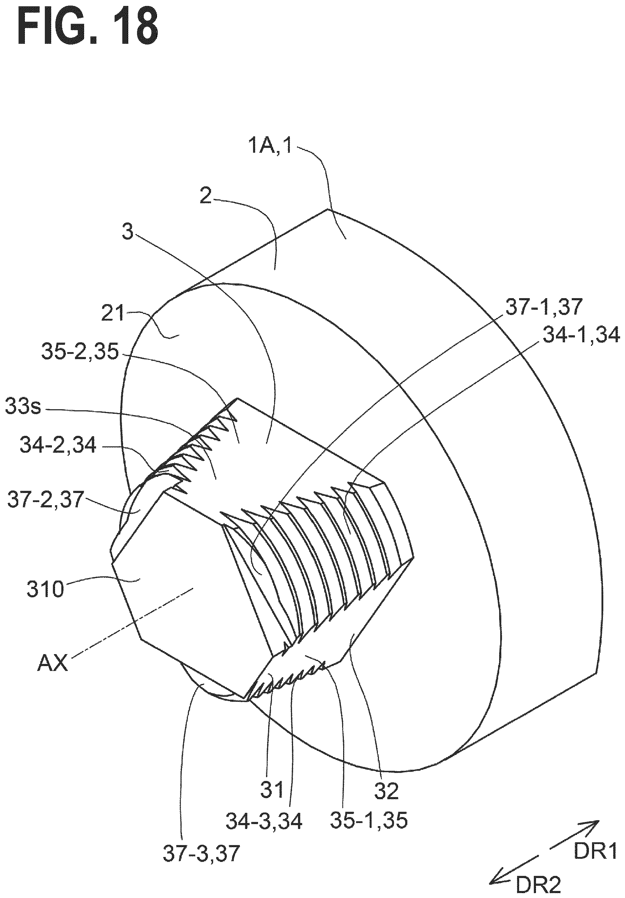

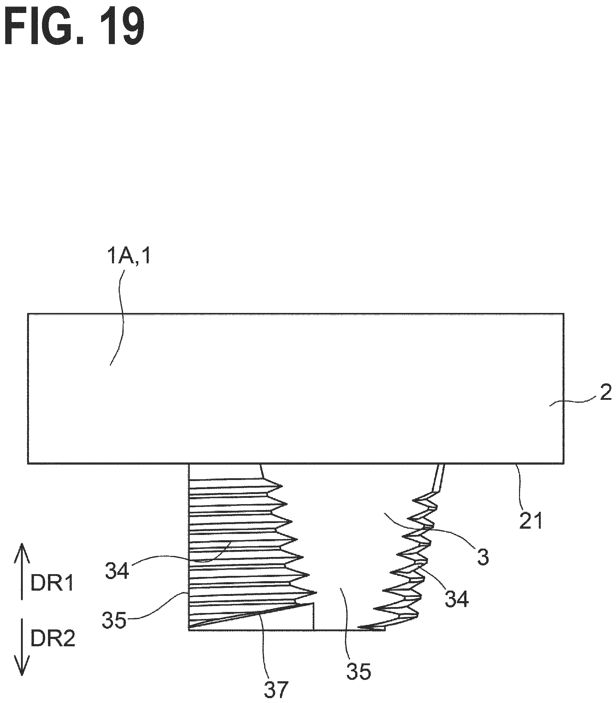

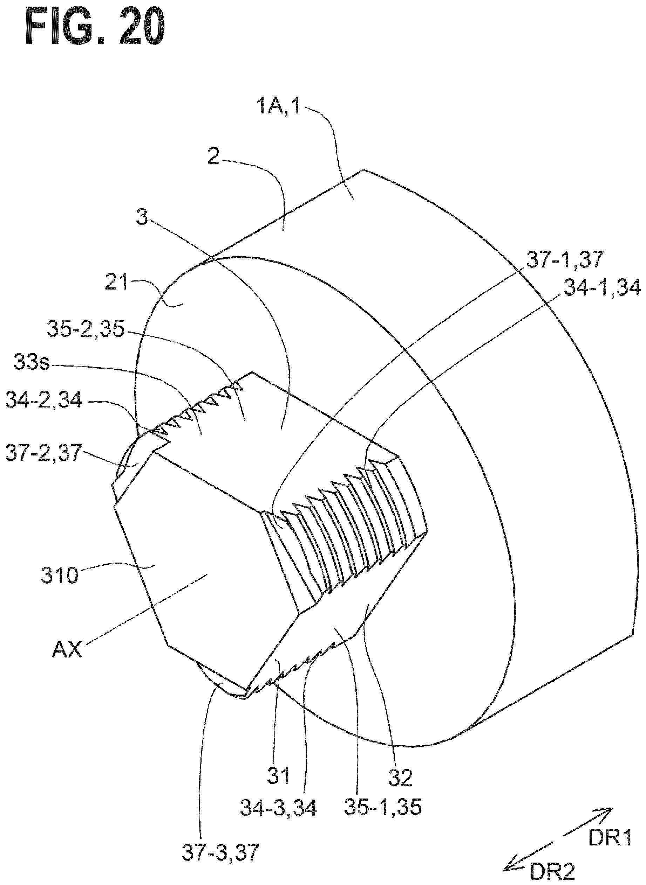

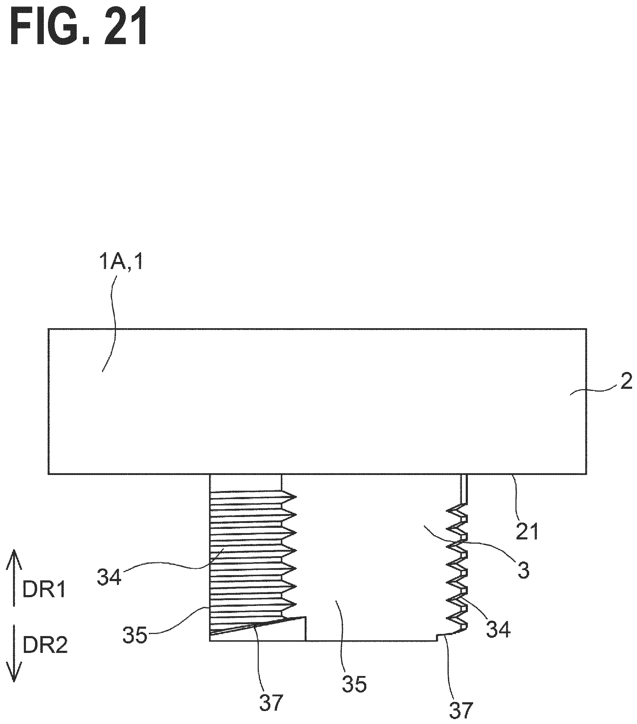

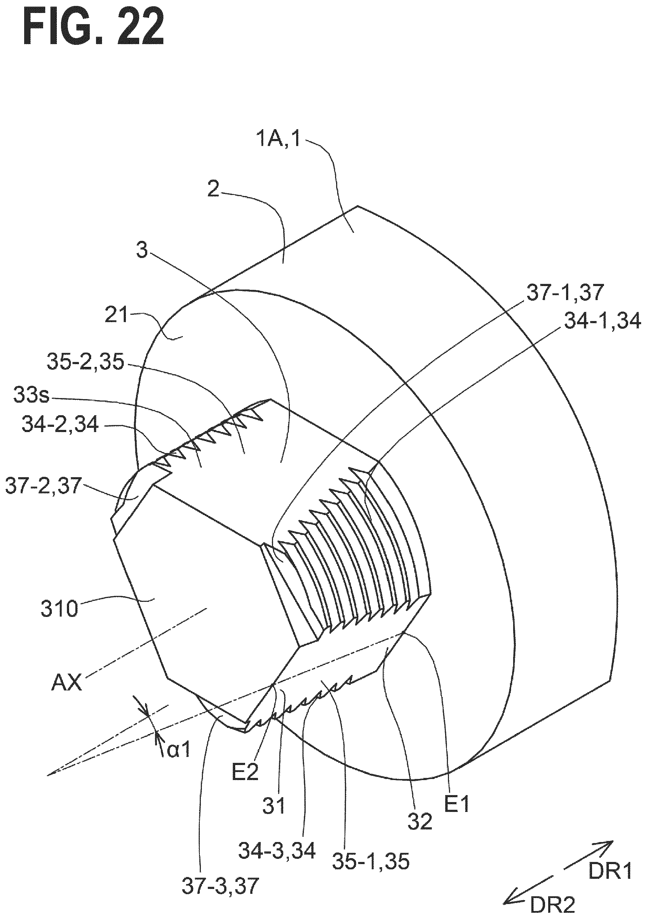

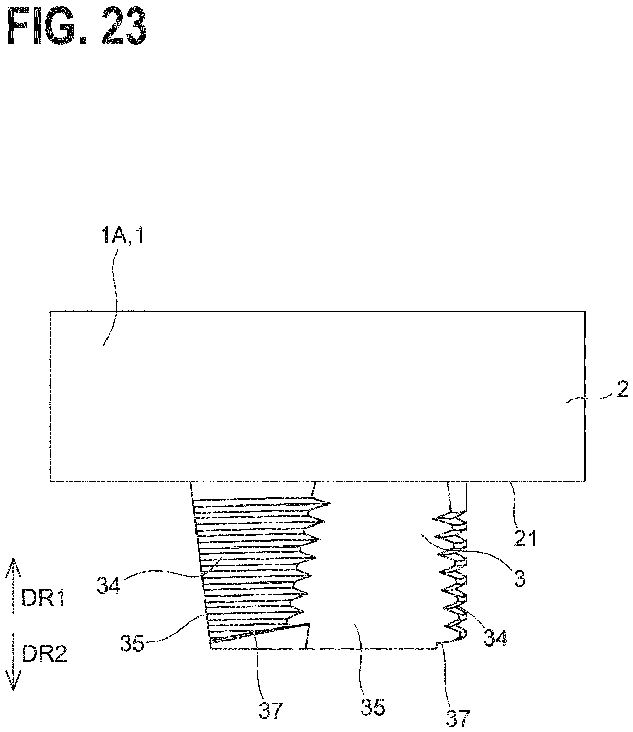

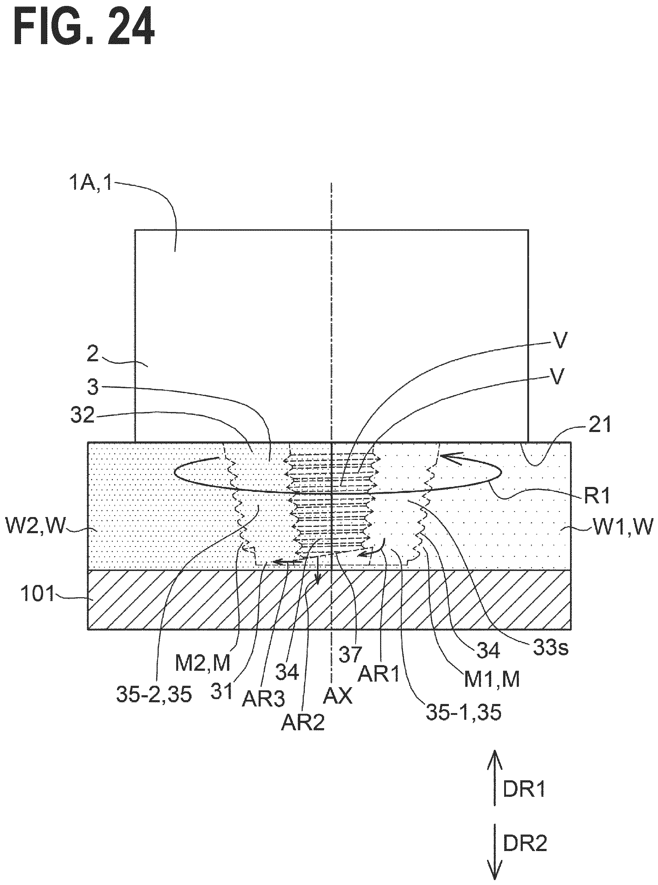

By referring to FIGs. 1 to 24, a friction stir welding tool 1A according to a first embodiment will be described. FIG. 1 is a perspective view of the friction stir welding tool 1A according to the first embodiment, schematically illustrating the friction stir welding tool. FIG. 2 is a perspective view of a part of the friction stir welding tool 1A according to the first embodiment, schematically illustrating the friction stir welding tool. FIG. 3 is a side view of the friction stir welding tool 1A according to first embodiment, schematically illustrating a situation in which friction stir welding is performed using the friction stir welding tool. It is to be noted that in FIG. 3, the probe 3, which is inserted into a workpiece W, is indicated by a dashed line in order to make it possible to grasp the arrangement relationship between the probe 3 and the workpiece W. FIG. 4 is a cross-sectional view of a friction stir welding tool in a comparative example, schematically illustrating a situation in which the friction stir welding is performed using the friction stir welding tool in the comparative example. FIG. 5 is a perspective view of the friction stir welding tool 1A according to the first embodiment, schematically illustrating a situation in which the friction stir welding tool is held by a tool holding member 103. FIG. 6 is a bottom view of the friction stir welding tool 1A according to the first embodiment, schematically illustrating the friction stir welding tool. FIG. 7 is a perspective view of a part of the friction stir welding tool 1A according to the first embodiment, schematically illustrating the friction stir welding tool. FIG. 8 is a side view of a part of the friction stir welding tool 1A according to the first embodiment, schematically illustrating the friction stir welding tool. FIGs. 9 and 10 are perspective views of a part of the friction stir welding tool 1A according to the first embodiment, schematically illustrating the friction stir welding tool. FIGs. 11 and 12 are side views of a part of the friction stir welding tool 1A according to the first embodiment, schematically illustrating the friction stir welding tool. FIGa. 13 and 14 are bottom views of a part of the friction stir welding tool 1A according to the first embodiment, schematically illustrating the friction stir welding tool. FIG. 15 is a bottom view of a part of a friction stir welding tool 1A according to a first modification of the first embodiment, schematically illustrating the friction stir welding tool. FIG. 16 is a perspective view of a part of a friction stir welding tool 1A according to a second modification of the first embodiment, schematically illustrating the friction stir welding tool. FIG. 17 is a side view of a part of the friction stir welding tool 1A according to the second modification of the first embodiment, schematically illustrating the friction stir welding tool. FIG. 18 is a perspective view of a part of a friction stir welding tool 1A according to a third modification of the first embodiment, schematically illustrating the friction stir welding tool. FIG. 19 is a side view of a part of the friction stir welding tool 1A according to the third modification of the first embodiment, schematically illustrating the friction stir welding tool. FIG. 20 is a perspective view of a part of a friction stir welding tool 1A according to a fourth modification of the first embodiment, schematically illustrating the friction stir welding tool. FIG. 21 is a side view of a part of the friction stir welding tool 1A according to the fourth modification of the first embodiment, schematically illustrating the friction stir welding tool. FIG. 22 is a perspective view of a part of a friction stir welding tool 1A according to a fifth modification of the first embodiment, schematically illustrating the friction stir welding tool. FIG. 23 is a side view of a part of the friction stir welding tool 1A according to the fifth modification of the first embodiment, schematically illustrating the friction stir welding tool. FIG. 24 is a side view of the friction stir welding tool 1A according to the first embodiment, schematically illustrating a situation in which the friction stir welding is performed using the friction stir welding tool. It is to be noted that in FIG. 24, the probe 3, which is inserted into a workpiece W, is indicated by a dashed line in order to make it possible to grasp the arrangement relationship between the probe 3 and the workpiece W.

As exemplified in FIG. 1, the friction stir welding tool 1A according to the first embodiment includes a shoulder 2 and a probe 3.

In an example illustrated in FIG. 2, the shoulder 2 includes a shoulder surface 21, which is to be in contact with a workpiece (in other words, a member to be welded). A workpiece that is a member to be welded, includes a first workpiece, and a second workpiece to which the first workpiece is welded. In an example illustrated
in FIG. 3, a first workpiece W1 is placed on a second workpiece W2. In this case, the shoulder surface 21 of the shoulder 2 is arranged to be in contact with the first workpiece W 1 (more specifically, an upper surface of the first workpiece W 1).

The probe 3 is inserted into the workpiece W, when the friction stir welding is performed. The probe 3 protrudes from the shoulder 2, and is rotatable about a first axis AX. In a state in which the probe 3 is in contact with the workpiece W, the probe 3 is rotated about the first axis AX, and a softened material is formed from the workpiece W. More specifically, by rotating the probe 3 about the first axis AX, frictional heat is generated between the probe 3 and the workpiece W, and the material constituting the workpiece W is softened by the frictional heat. As a result, in the vicinity of the probe 3, the material constituting the workpiece W becomes a softened material. In addition, the softened material formed from the workpiece W by the probe 3 being rotated about the first axis AX is plastically flowed by friction between the probe 3 and the softened material. Hereinafter, "plastic flow" will be simply referred to as "flow."

In the example illustrated in FIG. 2, on an outer circumferential surface 33s of the probe 3, a spiral groove portion 34 and a chamfered portion 35 are alternately formed in a circumferential direction *DR3* of the probe 3.

In the example illustrated in FIG. 3, when the probe 3 rotates about the first axis AX, the spiral groove portion 34 causes a softened material M to flow vertically. More specifically, when the probe 3 rotates in the first rotation direction *R1* about the first axis AX, the spiral groove portion 34 causes the softened material M, which is formed from the workpiece W, to flow downward.

The spiral groove portion 34 includes a plurality of grooves V, which approach the shoulder surface 21 in the first rotation direction *R1* (in other words, a plurality of grooves V, which are formed toward the first direction *DR1* in the first rotation direction *R1*). Such a plurality of grooves V cause the softened material M, which is formed from the workpiece W, to flow downward, when the probe 3 rotates in the first rotation direction *R1* about the first axis AX.

Also in the example illustrated in FIG. 3, when the probe 3 rotates about the first axis AX, the chamfered portion 35 causes the softened material M to flow in a direction along the circumferential direction of the probe 3. More specifically, when the probe 3 rotates in the first rotation direction *R1* about the first axis AX, the chamfered portion 35 causes the softened material M, which is formed from the workpiece W, to flow in the first rotation direction *R1*.

In the example illustrated in FIG. 3, the probe 3 is in contact with both the first workpiece W1 and the second workpiece W2. In this case, when the probe 3 is rotated about the first axis AX, the chamfered portion 35 causes each a first softened material M1, which is formed from the first workpiece W1, and a second softened material M2, which is formed from the second workpiece W2, to flow in the direction along the circumferential direction of the probe 3. In this manner, the first softened material M1 and the second softened material M2 are frictionally stirred in an effective manner, and the first workpiece W1 and the second workpiece W2 are firmly welded together. It is to be noted that the frictional heat generated by the relative movement between the probe 3 and the workpiece W also reaches a region somewhat apart from the probe 3. For this reason, it does not matter if the probe 3 is rotated about the first axis AX, in a state in which the probe 3 is in contact with only the first workpiece W1. In other words, it is sufficient if the second workpiece W2 is located in a position where the frictional heat generated by the relative movement between the probe 3 and the first workpiece W1 reaches, and the probe 3 may not necessarily have to be in contact with the second workpiece W2.

In the example illustrated in FIG. 2, an inclined face 37, which is continuous with the chamfered portion 35, is formed in a part of an end face 310 of the tip end portion 31 of the probe 3 (in other words, the end face 310 on a second direction *DR2* side of the tip end portion 31 of the probe 3). The inclined face 37 is an inclined face that approaches the shoulder surface 21 in the first rotation direction *R1* (in other words, an inclined face formed toward the first direction *DR1* in the first rotation direction *R1*).

In the example illustrated in FIG. 3, when the probe 3 rotates in the first rotation direction *R1* about the first axis AX, the softened material M, which is formed from the workpiece W, is guided from the chamfered portion 35 to the inclined face 37 (see an arrow AR1 in FIGs. 2 and 3). In addition, when the probe 3 rotates in the first rotation direction *R1* about the first axis AX, the inclined face 37 guides the softened material M, which has been guided from the chamfered portion 35, to the inclined face 37, downward (see an arrow AR 2 in FIG. 3). Consequently, the formation of a hook portion F (see FIG. 4), which is caused by an upward movement of the softened material M around the tip end portion 31 of the probe 3, is prevented, or eliminated or minimized.

In an example illustrated in FIG. 4, which illustrates a comparative example, it is assumed that the first material constituting the first workpiece W1 is softer than the second material constituting the second workpiece W2. In this case, when the probe 3 is rotated about the first axis AX, the second material constituting the second workpiece W2 moves to the first material side that is softer, in a region around the tip end portion 31 of the probe 3. In addition, the second material constituting the second workpiece W2 moves to the first material side, and the second material forms the hook portion F, which extends upward, around the tip end portion 31 of the probe 3. In a case where such a hook portion F is formed, mixing of the first material and the second material becomes insufficient in a region around the tip end portion 31 of the probe 3, and a defect (that is, an unwelded part) is likely to occur in an interface between the first workpiece W1 and the second workpiece W2.

In the friction stir welding tool 1A according to the first embodiment, the probe 3 includes the spiral groove portion 34 and the chamfered portion 35. Therefore, the rotation of the probe 3 about the first axis AX enables the spiral groove portion 34 and the chamfered portion 35 to flow the softened material M, which is formed from the workpiece W, effectively in a vertical direction and in the direction along the circumferential direction of the probe 3. In accordance with the flow, the first material constituting the first workpiece W1 and the second material constituting the second workpiece W2 are well stirred, and the first workpiece W1 and the second workpiece W2 are firmly welded together.

In addition, in the friction stir welding tool 1A according to the first embodiment, the inclined face 37, which is continuous with the chamfered portion 35, is formed in a part of the end face 310 of the tip end portion 31 of the probe 3. The inclined face 37 is continuous with the chamfered portion 35. Therefore, when the probe 3 is rotated about the first axis AX, the softened material M is smoothly guided from the chamfered portion 35 to the inclined face 37. Further, the probe 3 is rotated about the first axis AX, and then the inclined face 37 guides downward the softened material M, which has been guided from the chamfered portion 35, to the inclined face 37. The softened material M is guided downward by the inclined face 37, and the first material constituting the first workpiece W1 and the second material constituting the second workpiece W2 are well stirred in a region in the vicinity of the tip end portion 31 of the probe 3. In this manner, the first workpiece W1 and the second workpiece W2 are firmly welded together.

Additionally, in a case where the first workpiece W1 and the second workpiece W2 are overlaid and welded together by the friction stir welding tool 1A, the hook portion F is less likely to be formed around the tip end portion 31 of the probe 3. As a result, a defect (that is, an unwelded part) is less likely to occur in the interface between the first workpiece W1 and the second workpiece W2.

### (Optionally Additional Configuration)

Subsequently, by referring to FIGs. 1 to 24, optionally additional configurations to be adoptable in the first embodiment will be described.

### (Base End Portion 5)

In the example illustrated in FIG. 1, the friction stir welding tool 1A includes a base end portion 5 and a tip end portion where the probe 3 is disposed. The base end portion 5 of the friction stir welding tool 1A is held by the tool holding member 103 (see FIG. 5, as necessary) of a friction stir welding apparatus.

In the example illustrated in FIG. 1, the base end portion 5 includes an outer circumferential surface 50t, and the outer circumferential surface 50t includes an arc-shaped first surface 51t and a planar second surface 52t. The second surface 52t functions as a surface to be pressed by a tip end of a fixing member such as a fixing screw. It is to be noted that the configuration of the base end portion 5 is adoptable also in first to fifth modifications to be described below.

### (Chamfered Portion 35)

In an example illustrated in FIG. 6, the chamfered portion 35 includes: a first chamfered portion 35-1, which is formed on the outer circumferential surface 33s of the probe 3; and a second chamfered portion 35-2, which is formed on the outer circumferential surface 33s of the probe 3. Additionally, the chamfered portion 35 may include a third chamfered portion 35-3, which is formed on the outer circumferential surface 33s of the probe 3, or may include another chamfer formed on the outer circumferential surface 33s of the probe 3. In other words, the number of chamfered portions 35, which are formed on the outer circumferential surface 33s of the probe 3, may be two, three, or four or more.

In an example illustrated in FIG. 7, the first chamfered portion 35-1 extends from the tip end portion 31 of the probe 3 toward the shoulder surface 21 of the shoulder 2. The first chamfered portion 35-1 constitutes a first side surface of the probe 3.

In the example illustrated in FIG. 7, the first chamfered portion 35-1 (in other words, the first side surface of the probe 3) is an inclined surface that is inclined with respect to the first axis AX. More specifically, the first chamfered portion 35-1 is an inclined surface that approaches the first axis AX from the base end portion 32 of the probe 3 toward the tip end portion 31. In the example illustrated in FIG. 7, the first chamfered portion 35-1 has a planar shape, but the first chamfered portion 35-1 may have a concave shape or a convex shape.

In the example illustrated in FIG. 7 (or FIG. 22), an angle α1, which is formed by the first chamfered portion 35-1 and a straight line parallel to the first axis AX (more specifically, the angle α1, which is formed by a straight line connecting an upper side center E1 of the first chamfered portion 35-1 and a lower side center E2 of the first chamfered portion 35-1 and a straight line parallel to the first axis AX), is greater than 0 degrees and equal to or smaller than 45 degrees.

Alternatively, as exemplified in FIG. 18 (or FIG. 20), the first chamfered portion 35-1 (in other words, the first side surface of the probe 3) may be parallel to the first axis AX.

In the example illustrated in FIG. 7, the second chamfered portion 35-2 extends from the tip end portion 31 of the probe 3 toward the shoulder surface 21 of the shoulder 2. The second chamfered portion 35-2 constitutes a second side surface of the probe 3.

In the example illustrated in FIG. 7, the second chamfered portion 35-2 (in other words, the second side surface of the probe 3) is an inclined surface that is inclined with respect to the first axis AX. More specifically, the second chamfered portion 35-2 is an inclined surface that approaches the first axis AX from the base end portion 32 of the probe 3 toward the tip end portion 31. In the example illustrated in FIG. 7, the second chamfered portion 35-2 has a planar shape, but the second chamfered portion 35-2 may have a concave shape or a convex shape.

In the example illustrated in FIG. 7, an angle α2, which is formed by the second chamfered portion 35-2 and a straight line parallel to the first axis AX (more specifically, the angle α2, which is formed by a straight line connecting an upper side center of the second chamfered portion 35-2 and a base center of the second chamfered portion 35-2 and a straight line parallel to the first axis AX), is greater than 0 degrees and equal to or smaller than 45 degrees.

Alternatively, as exemplified in FIG. 18 (or FIG. 20), the second chamfered portion 35-2 (in other words, the second side surface of the probe 3) may be parallel to the first axis AX.

It is to be noted that the angle α1, which is formed by the first chamfered portion 35-1 and the straight line parallel to the first axis AX, is preferably identical to the angle α2, which is formed by the second chamfered portion 35-2 and the straight line parallel to the first axis AX. However, the angle α1 may be different from the angle α2.

In the example illustrated in FIG. 6, the third chamfered portion 35-3 extends from the tip end portion 31 of the probe 3 toward the shoulder surface 21 of the shoulder 2. The third chamfered portion 35-3 constitutes a third side surface of the probe 3. In the example illustrated in FIG. 6, the third chamfered portion 35-3 is an inclined surface that is inclined with respect to the first axis AX. More specifically, the third chamfered portion 35-3 is an inclined surface that approaches the first axis AX from the base end portion of the probe 3 toward the tip end portion 31. Alternatively, the third chamfered portion 35-3 (in other words, the third side surface of the probe 3) may be parallel to the first axis AX.

In the example illustrated in FIG. 7, the upper side of the first chamfered portion 35-1 (or the upper side of the second chamfered portion 35-2) is connected with the shoulder surface 21, and the base of the first chamfered portion 35-1 (or the base of the second chamfered portion 35-2) is connected with the end face 310 of the probe 3. Alternatively, the upper side of the first chamfered portion 35-1 (or the upper side of the second chamfered portion 35-2) may be located to be spaced apart from the shoulder surface 21.

### (Spiral Groove Portion 34)

In the example illustrated in FIG. 6, the spiral groove portion 34 includes: a first spiral groove portion 34-1, which is formed on the outer circumferential surface 33s of the probe 3; and a second spiral groove portion 34-2, which is formed on the outer circumferential surface 33s of the probe 3. Additionally, the spiral groove portion 34 may include a third spiral groove portion 34-3, which is formed on the outer circumferential surface 33s of the probe 3, or may include another spiral groove formed in the outer circumferential surface 33s of the probe 3. In other words, the number of spiral groove portions 34, which are formed on the outer circumferential surface 33s of the probe 3 may be two, three, or four or more. In the example illustrated in FIG. 6, the number of spiral groove portions 34 (for example, three), which are formed on the outer circumferential surface 33s of the probe 3, is equal to the number (for example, three) of the chamfered portions 35, which are formed on the outer circumferential surface 33s of the probe 3. In the example illustrated in FIG. 6, when viewed in a direction along the first direction *DR1*, a closed region RE (more specifically, a substantially triangular closed region RE), which surrounds the first axis AX (or a central surface 38 to be described below) is formed by the plurality of spiral groove portions 34 and the plurality of chamfered portions 35.

In an example illustrated in FIG. 8, the first spiral groove portion 34-1 includes a plurality of first grooves V1, which approach the shoulder surface 21 in the first rotation direction *R1*, and the second spiral groove portion 34-2 includes a plurality of second grooves V2, which approach the shoulder surface 21 in the first rotation direction *R1*. In addition, the third spiral groove portion 34-3 includes a plurality of third grooves V3, which approach the shoulder surface 21 in the first rotation direction *R1*. In this case, when the probe 3 rotates in the first rotation direction *R1* about the first axis AX, the plurality of first grooves V1, the plurality of second grooves V2, and the plurality of third grooves V3 guide downward the softened material formed from the workpiece W in accordance with the rotation of the probe 3.

In the example illustrated in FIG. 8, the plurality of first grooves V1, which are disposed in the first spiral groove portion 34-1, the plurality of second grooves V2, which are disposed in the second spiral groove portion 34-2, and the plurality of third grooves V3, which are disposed in the third spiral groove portion 34-3, work in cooperation with each other to function as spiral grooves. In the example illustrated in FIG. 8, the plurality of second grooves V2 are separated from the plurality of first grooves V1 by the second chamfered portion 35-2. The plurality of third grooves V3 are also separated from the plurality of first grooves V1 by the first chamfered portion 35-1.

In an example illustrated in FIG. 9, the first spiral groove portion 34-1 is disposed between the first chamfered portion 35-1 and the second chamfered portion 35-2 in a direction along the circumferential direction *DR3* of the probe 3. The second spiral groove portion 34-2 is disposed between the second chamfered portion 35-2 and the third chamfered portion 35-3 in the direction along the circumferential direction *DR3* of the probe 3. In addition, the third spiral groove portion 34-3 is disposed between the third chamfered portion 35-3 and the first chamfered portion 35-1 in the direction along the circumferential direction *DR3* of the probe 3.

### (End face 310 of Tip End Portion 31 of Probe 3)

In the example illustrated in FIG. 6, the end face 310 of the tip end portion 31 of the probe 3 includes: the central surface 38; and at least one inclined face 37, which is disposed to be farther from the first axis AX than the central surface 38. In the example illustrated in FIG. 6, each of the plurality of inclined faces (37-1, 37-2, 37-3) is disposed to be farther from the first axis AX than an outer edge portion of the central surface 38. It is to be noted that in FIG. 6, in order to make it easier to grasp the end face 310 of the tip end portion 31 of the probe 3, hatching with dots is added to the end face 310.

In the example illustrated in FIG. 6, when viewed in the direction along the first direction *DR1*, the end face 310 of the tip end portion 31 of the probe 3 is surrounded by the closed region RE (more specifically, the closed region RE having a substantially triangular shape), which is formed by the plurality of spiral groove portions 34 and the plurality of chamfered portions 35.

### (Central Surface 38)

In the example illustrated in FIG. 7, the end face 310 of the tip end portion 31 of the probe 3 includes a central surface 38 through which the first axis AX passes. In the example illustrated in FIG. 7, the central surface 38 is planar. Alternatively, the central surface 38 may be a curved surface (for example, a convex curved surface or a concave curved surface). In the example illustrated in FIG. 7, the central surface 38 is disposed on the second direction *DR2* side (in other words, a far side from the shoulder surface 21) relative to each of the plurality of inclined faces 37.

The central surface 38 eliminates or minimizes the softened material M (see FIG. 3, as necessary) from flowing upward. More specifically, when the probe 3 rotates in the first rotation direction *R1* about the first axis AX, the central surface 38 eliminates or minimizes the softened material M, which has been flowed downward by the inclined face 37, from flowing upward after that.

### (Inclined face 37)

In the example illustrated in FIG. 7, the inclined face 37 includes: a first inclined face 37-1; and a second inclined face 37-2. Additionally, the inclined face 37 may include a third inclined face 37-3, or may include another inclined face. In other words, the number of inclined faces formed on the end face 310 of the tip end portion 31 of the probe 3 may be two, three, or four or more.

In the example illustrated in FIG. 7, the number of inclined faces 37 (for example, three), which are formed on the end face 310 of the tip end portion 31 of the probe 3, is equal to the number (for example, three) of the spiral groove portions 34, which are formed on the outer circumferential surface 33s of the probe 3.

In the example illustrated in FIG. 7, the inclined face 37 is inclined to approach the shoulder surface 21 in the first rotation direction *R1* (in other words, the inclined face 37 is a surface formed toward the first direction *DR1* in the first rotation direction *R1*). In this case, when the probe 3 rotates in the first rotation direction *R1* about the first axis AX, the inclined face 37 guides the softened material formed from the workpiece downward (see the arrow AR2).

More specifically, the first inclined face 37-1, which is formed on the end face 310 of the tip end portion 31 of the probe 3, is inclined to approach the shoulder surface 21 in the first rotation direction *R1*, and the second inclined face 37-2, which is formed on the end face 310 of the tip end portion 31 of the probe 3, is inclined to approach the shoulder surface 21 in the first rotation direction *R1*. Also, the third inclined face 37-3, which is formed on the end face 310 of the tip end portion 31 of the probe 3, is inclined to approach the shoulder surface 21 in the first rotation direction *R1*.

In the example illustrated in FIG. 7, the first inclined face 37-1, the second inclined face 37-2, and the third inclined face 37-3 each have a planar inclined face. Alternatively, the first inclined face 37-1, the second inclined face 37-2, and the third inclined face 37-3 each may have a concave inclined face or a convex inclined face.

In the example illustrated in FIG. 9, the inclined face 37 is connected through a stepped face 39 with an outer edge portion 38u of the central surface 38. More specifically, the first inclined face 37-1 is connected through a first stepped face 39-1 with a first outer edge portion 38u-1 of the central surface 38, and the second inclined face 37-2 is connected through a second stepped face 39-2 with a second outer edge portion 38u-2 of the central surface 38. In addition, the third inclined face 37-3 is connected through a third stepped face 39-3 with a third outer edge portion 38u-3 of the central surface 38.

The stepped face 39 causes the softened material M (see FIG. 3, as necessary) to flow in the direction along the circumferential direction of the probe 3. More specifically, when the probe 3 rotates in the first rotation direction *R1* about the first axis AX, the stepped face 39 causes the softened material M to flow in the first rotation direction *R1*. The stepped face 39 rotates in the first rotation direction *R1*, and at least a part of the amount of movement applied from the chamfered portion 35 to the softened material M in the first rotation direction *R1* is maintained.

It is to be noted that the stepped face 39 may be omitted. In this case, the inclined face 37 and the central surface 38 are smoothly connected with each other without a step.

In the example illustrated in FIG. 6, when viewed in a direction along the first axis AX, an extension direction of the inclined face 37 (in other words, a longitudinal direction of the inclined face 37) is a direction along the circumferential direction about the first axis AX. Also when viewed in the direction along the first axis AX, a width direction of the inclined face 37 is a direction along a radial direction from the first axis AX. More specifically, when viewed in the direction along the first axis AX, an extension direction of the first inclined face 37-1 is a direction along the circumferential direction about the first axis AX, and a width direction of the first inclined face 37-1 is the direction along the radial direction from the first axis AX. Also when viewed in the direction along the first axis AX, an extension direction of the second inclined face 37-2 is the direction along the circumferential direction about the first axis AX, and a width direction of the second inclined face 37-2 is the direction along the radial direction from the first axis AX. Also when viewed in the direction along the first axis AX, an extension direction of the third inclined face 37-3 is the direction along the circumferential direction about the first axis AX, and a width direction of the third inclined face 37-3 is the direction along the radial direction from the first axis AX.

In the example illustrated in FIG. 6, when viewed in the direction along the first axis AX (more specifically in the direction along the first direction *DR1*)*,* the first inclined face 37-1, the second inclined face 37-2, and the third inclined face 37-3 each have a shape surrounded by an outer edge having a substantially arcuate shape and an inner edge that is substantially straight. Alternatively, when viewed in the direction along the first axis AX, each inclined face 37 may have another shape.

In an example illustrated in FIG. 10, the first inclined face 37-1 is disposed between the first chamfered portion 35-1 and the second chamfered portion 35-2 in the direction along the circumferential direction *DR3* of the probe 3. More specifically, a first end portion 37a-1 of the first inclined face 37-1 is continuous with the first chamfered portion 35-1, and a second end portion 37b-1 of the first inclined face 37-1 is continuous with the second chamfered portion 35-2.

In the example illustrated in FIG. 10, it is assumed that in a state in which the probe 3 is inserted into the workpiece, the probe 3 rotates in the first rotation direction *R1* about the first axis AX. In this case, the softened material formed from the workpiece W, when the probe 3 is rotated about the first axis AX, is guided from the first chamfered portion 35-1 to the first inclined face 37-1 (see the arrow AR1), and the first inclined face 37-1 guides downward the softened material that has been guided from the first chamfered portion 35-1 to the first inclined face 37-1 (see the arrow AR2). The first inclined face 37-1 also guides the softened material, which has been guided from the first chamfered portion 35-1 to the first inclined face 37-1, partially to the second chamfered portion 35-2 (see an arrow AR3). Therefore, the capability of the first inclined face 37-1 (more specifically, the capability of guiding the softened material downward) is prevented from being impaired, resulting from the softened material remaining in the vicinity of the first inclined face 37-1.

In the example illustrated in FIG. 10, the second inclined face 37-2 is disposed between the second chamfered portion 35-2 and the third chamfered portion 35-3 in the direction along the circumferential direction *DR3* of the probe 3. More specifically, a first end portion 37a-2 of the second inclined face 37-2 is continuous with the second chamfered portion 35-2, and a second end portion 37b-2 of the second inclined face 37-2 is continuous with the third chamfered portion 35-3. Also in the example illustrated in FIG. 10, the third inclined face 37-3 is disposed between the third chamfered portion 35-3 and the first chamfered portion 35-1 in the direction along the circumferential direction *DR3* of the probe 3. More specifically, a first end portion 37a-3 of the third inclined face 37-3 is continuous with the third chamfered portion 35-3, and a second end portion 37b-3 of the third inclined face 37-3 is continuous with the first chamfered portion 35-1.

In the example illustrated in FIG. 8, in a side view, the first chamfered portion 35-1, the first inclined face 37-1, and the second chamfered portion 35-2 are disposed to form a substantially letter U-shape. In other words, in the side view, a letter U-shaped portion P1 is defined by the first chamfered portion 35-1, the first inclined face 37-1, and the second chamfered portion 35-2. The first chamfered portion 35-1 and the second chamfered portion 35-2 constitute two sides of the letter U-shaped portion P1, and the first inclined face 37-1 constitutes the base of the letter U-shaped portion P1.

In the example illustrated in FIG. 8, in the side view, the first spiral groove portion 34-1 is disposed in an inner region of the letter U-shaped portion P1, which is defined by the first chamfered portion 35-1, the first inclined face 37-1, and the second chamfered portion 35-2. In this case, the first inclined face 37-1, which constitutes the base of the letter U-shaped portion P1 described above, is capable of guiding a part of the softened material formed from the workpiece from the first chamfered portion 35-1 toward the second chamfered portion 35-2, and the first spiral groove portion 34-1, which is disposed in the inner region of the letter U-shaped portion P1, is capable of guiding another part of the softened material formed from the workpiece from the first chamfered portion 35-1 toward the second chamfered portion 35-2.

In the example illustrated in FIG. 8, in the side view, the first spiral groove portion 34-1 is surrounded by the first chamfered portion 35-1, the first inclined face 37-1, the second chamfered portion 35-2, and the shoulder 2. In this case, in a state in which an upward movement of the softened material is restricted by the shoulder 2, the first spiral groove portion 34-1 and the first inclined face 37-1 are capable of smoothly guiding the softened material from the first chamfered portion 35-1 toward the second chamfered portion 35-2.

In the side view, a second letter U-shaped portion may be defined by the second chamfered portion 35-2, the second inclined face 37-2, and the third chamfered portion 35-3. In addition, the second spiral groove portion 34-2 may be disposed in an inner region of the second letter U-shaped portion. Furthermore, in the side view, the second spiral groove portion 34-2 may be surrounded by the second chamfered portion 35-2, the second inclined face 37-2, the third chamfered portion 35-3, and the shoulder 2.

In the side view, a third letter U-shaped portion may be defined by the third chamfered portion 35-3, the third inclined face 37-3, and the first chamfered portion 35-1. In addition, the third spiral groove portion 34-3 may be disposed in an inner region of the third letter U-shaped portion. Furthermore, in the side view, the third spiral groove portion 34-3 may be surrounded by the third chamfered portion 35-3, the third inclined face 37-3, the first chamfered portion 35-1, and the shoulder 2.

In an example illustrated in FIG. 11, an inclination angle of the inclined face 37 with respect to a plane PL, which is perpendicular to the first axis AX, is equal to or greater than 1 degree and equal to or smaller than 30 degrees. More specifically, an inclination angle β of a straight line connecting an upper end E3 of the first inclined face 37-1 and a lower end E4 of the first inclined face 37-1 with respect to the plane PL, which is perpendicular to the first axis AX, is, for example, equal to or greater than 1 degree and equal to or smaller than 30 degrees. In a case where the inclination angle β is equal to or greater than 1 degree and equal to or smaller than 30 degrees, the softened material formed from the workpiece is guided downward at an appropriate velocity by the inclined face 37. However, in an embodiment, the inclination angle β described above is not limited to equal to or greater than 1 degree and equal to or smaller than 30 degrees.

In the example illustrated in FIG. 11, the inclination angle β of the first inclined face 37-1 with respect to the plane PL, which is perpendicular to the first axis AX, is greater than the inclination angle of the first groove V1 of the first spiral groove portion 34-1 with respect to the plane PL, which is perpendicular to the first axis AX. More specifically, in the side view, an angle formed by the first inclined face 37-1 and the plane PL, which is perpendicular to the first axis AX, is larger than an angle formed by an extension direction of the first groove V1 of the first spiral groove portion 34-1 and the plane PL, which is perpendicular to the first axis AX. Alternatively, the inclination angle β of the first inclined face 37-1 with respect to the plane PL, which is perpendicular to the first axis AX, may be smaller than the inclination angle of the first groove V1 of the first spiral groove portion 34-1 with respect to the plane PL, which is perpendicular to the first axis AX. Furthermore, alternatively, both of the inclination angles may be equal to each other.

The inclination angle of the second inclined face 37-2 with respect to the plane PL, which is perpendicular to the first axis AX, is preferably substantially equal to the inclination angle β of the first inclined face 37-1 with respect to the plane PL, which is perpendicular to the first axis AX. In addition, the inclination angle of the third inclined face 37-3 with respect to the plane PL, which is perpendicular to the first axis AX, is preferably substantially equal to the inclination angle β of the first inclined face 37-1 with respect to the plane PL, which is perpendicular to the first axis AX.

In an example illustrated in FIG. 12, the height difference of the inclined face 37 (for example, the first inclined face 37-1) in the direction along the first axis AX is equal to or greater than 0.1 mm and equal to or smaller than 5 mm (alternatively, equal to or greater than 0.1 mm and equal to or smaller than 1 mm). More specifically, a space H1 between a plane PL1, which passes through the upper end E3 of the first inclined face 37-1, and which is perpendicular to the first axis AX, and a plane PL2, which passes through the lower end E4 of the first inclined face 37-1, and which is perpendicular to the first axis AX, is equal to or greater than 0.1 mm and equal to or smaller than 5 mm (alternatively, equal to or greater than 0.1 mm and equal to or smaller 1 mm). In a case where the space H1 is equal to or greater than 0.1 mm and equal to or smaller than 5 mm, the softened material formed from the workpiece is guided downward at an appropriate velocity by the inclined face 37. However, in an embodiment, the space H1 described above is not limited to equal to or greater than 0.1 mm and equal to or smaller than 5 mm.

In the example illustrated in FIG. 12, the central surface 38 (that is, the central surface 38 of the end face of the tip end portion 31 of the probe 3) is located further on a lower side than the lower end E4 of the first inclined face 37-1. A space H2 between the plane PL2, which passes through the lower end E4, and which is perpendicular to the first axis AX, and a plane PL3, which passes through the lowermost end of the probe 3, and which is perpendicular to the first axis AX, may be smaller than the space H1 described above.

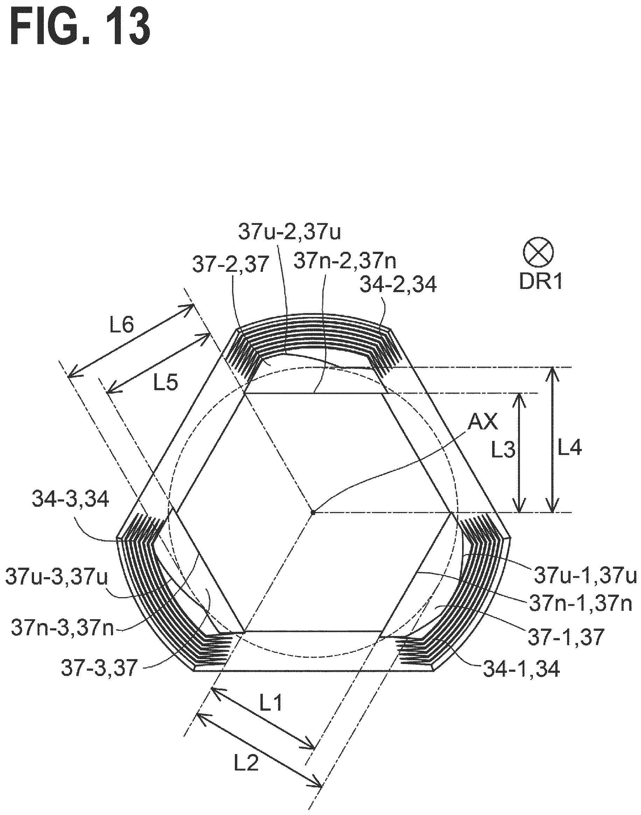

In an example illustrated in FIG. 13, an outer side edge 37u of the inclined face 37 overlaps the spiral groove portion 34, when viewed in the direction along the first direction *DR1*. More specifically, a first outer side edge 37u-1 of the first inclined face 37-1 overlaps the first spiral groove portion 34-1, when viewed in the direction along the first direction *DR1.* A second outer side edge 37u-2 of the second inclined face 37-2 overlaps the second spiral groove portion 34-2, when viewed in the direction along the first direction *DR1*. Also, a third outer side edge 37u-3 of the third inclined face 37-3 overlaps the third spiral groove portion 34-3, when viewed in the direction along the first direction *DR1*.

In the example illustrated in FIG. 13, the distance between an inner side edge 37n of the inclined face 37 and the first axis AX is smaller than the distance between an innermost edge of the spiral groove portion 34 and the first axis AX. It is to be noted that in FIG. 13, the innermost edge of the spiral groove portion 34 is indicated by a dashed circle.

In the example illustrated in FIG. 13, a distance L1 between an inner side edge 37n-1 of the first inclined face 37-1 and the first axis AX is shorter than a distance L2 between the innermost edge of the first spiral groove portion 34-1 and the first axis AX. A distance L3 between an inner side edge 37n-2 of the second inclined face 37-2 and the first axis AX is shorter than a distance L4 between the innermost edge of the second spiral groove portion 34-2 and the first axis AX. In addition, a distance L5 between an inner side edge 37n-3 of the third inclined face 37-3 and the first axis AX is shorter than a distance L6 between the innermost edge of the third spiral groove portion 34-3 and the first axis AX.

When viewed in the direction along the first direction *DR1*, in a case where the outer side edge 37u of the inclined face 37 and the spiral groove portion 34 overlap each other, the total size of the spiral groove portion 34 and the inclined face 37 can be reduced. Thus, the size of the probe 3 is not increased. In addition, in a case where the distance between the inner side edge 37n of the inclined face 37 and the first axis AX is smaller than the distance between the innermost edge of the spiral groove portion 34 and the first axis AX, the area of the inclined face 37 is sufficiently ensured. Therefore, the capability of the inclined face 37 to guide the softened material downward is sufficiently ensured.

### (Shape of End face 310 of Probe 3)

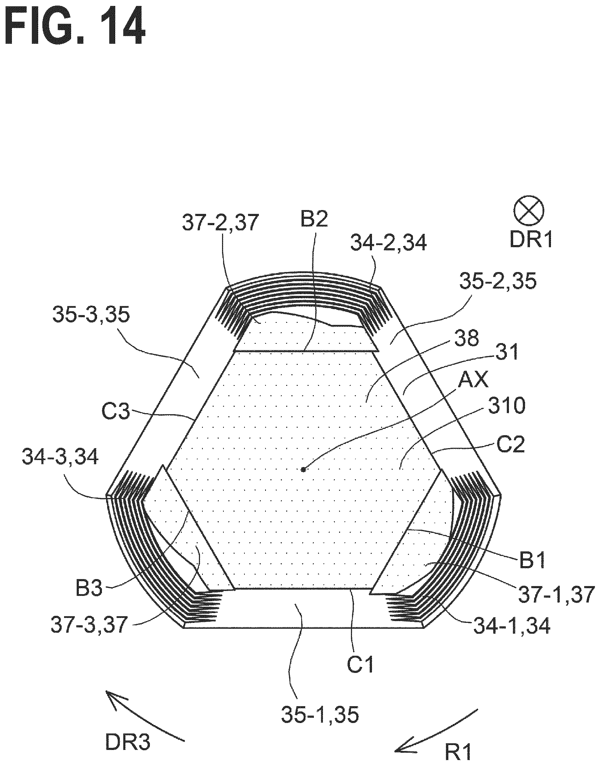

In an example illustrated in FIG. 14, the end face 310 of the tip end portion 31 of the probe 3 includes three inclined faces (37-1, 37-2, 37-3) and the central surface 38. In the example illustrated in FIG. 14, when viewed in the direction along the first axis AX, the end face 310 of the tip end portion 31 of the probe 3 has a substantially triangular shape. It is to be noted that in FIG. 14, in order to make it easier to grasp the shape of the end face 310 of the tip end portion 31 of the probe 3, hatching with dots is added to the end face 310.

In the example illustrated in FIG. 14, when viewed in the direction along the first axis AX, the central surface 38 has a substantially hexagonal shape. Also, when viewed in the direction along the first axis AX, the three sides of such a substantially hexagonal shape define boundaries (B1, B2, B3) between the central surface 38 and the three inclined faces 37, and the other three sides of the substantially hexagonal shape define boundaries (C1, C2, C3) between the central surface 38 and the three chamfered portions 35.

Alternatively, in a first modification of the first embodiment, as exemplified in FIG. 15, when viewed in the direction along the first axis AX, the end face 310 of the tip end portion 31 of the probe 3 has a substantially square shape, and the central surface 38 has a substantially octagonal shape. It is to be noted that in FIG. 15, in order to make it easier to grasp the shape of the end face 310 of the tip end portion 31 of the probe 3, hatching with dots is added to the end face 310.

In the example illustrated in FIG. 15, when viewed in the direction along the first axis AX, four sides (in other words, four sides of the substantially octagonal shape described above) of the central surface 38 define boundaries (B1, B2, B3, B4) between the central surface 38 and the four inclined faces 37, and the other four sides of the central surface 38 (in other words, the other four sides of the substantially octagonal shape described above) define boundaries (C1, C2, C3, C4) between the central surface 38 and the four chamfered portions 35.

The total area of the plurality of inclined faces 37 (in the example illustrated in FIG. 14, the sum of the area of the first inclined face 37-1, the area of the second inclined face 37-2, and the area of the third inclined face 37-3) is preferably equal to or greater than 1/5 the area of the central surface 38. The total area of the plurality of inclined faces 37 is equal to or greater than 1/5 the area of the central surface 38, thereby sufficiently ensuring the capability of the inclined face 37 to guide the softened material downward. In addition, the total area of the plurality of inclined faces 37 is preferably equal to or smaller than 2/3 the area of the central surface 38. The total area of the plurality of inclined faces 37 is equal to or smaller than 2/3 the area of the central surface 38, and the downward flow of the softened material does not become excessive. However, in an embodiment, the total area of the plurality of inclined faces 37 is not limited to equal to or greater than 1/5 the area of the central surface 38 and equal to or smaller than 2/3 the area of the central surface 38.

### (Tip End Portion 31 of Probe 3)

In the example illustrated in FIG. 9, the tip end portion 31 of the probe 3 includes: the inclined face 37; the central surface 38, through which the first axis AX passes; and the stepped face 39, which connects the inclined face 37 and the central surface 38. The stepped face 39 may be a face parallel to the first axis AX or a face inclined with respect to the first axis AX. In addition, the stepped face 39 may be a flat face or a curved face (for example, a convex curved face or a concave curved face).

In the example illustrated in FIG. 9, the tip end portion 31 of the probe 3 includes: the first inclined face 37-1; the central surface 38, through which the first axis AX passes; and the first stepped face 39-1, which connects the first inclined face 37-1 and the central surface 38. In the example illustrated in FIG. 9, the first stepped face 39-1 is in contact with each the first inclined face 37-1, the central surface 38, the first chamfered portion 35-1, and the second chamfered portion 35-2. In other words, a first boundary line D1 is arranged between the first stepped face 39-1 and the first inclined face 37-1, a second boundary line D2 is arranged between the first stepped face 39-1 and the central surface 38, a third boundary line D3 is arranged between the first stepped face 39-1 and the first chamfered portion 35-1, and a fourth boundary line D4 is arranged between the first stepped face 39-1 and the second chamfered portion 35-2. In the example illustrated in FIG. 9, the length of the third boundary line D3 is longer than the length of the fourth boundary line D4. Also, in the example illustrated in FIG. 9, the length of the first boundary line D1 is slightly longer than the length of the second boundary line D2.

In the example illustrated in FIG. 9, the tip end portion 31 of the probe 3 includes: the second inclined face 37-2; and the second stepped face 39-2, which connects the second inclined face 37-2 and the central surface 38. In the example illustrated in FIG. 9, the second stepped face 39-2 is in contact with each the second inclined face 37-2, the central surface 38, the second chamfered portion 35-2, and the third chamfered portion 35-3. In other words, a fifth boundary line D5 is arranged between the second stepped face 39-2 and the second inclined face 37-2, a sixth boundary line D6 is arranged between the second stepped face 39-2 and the central surface 38, a seventh boundary line D7 is arranged between the second stepped face 39-2 and the second chamfered portion 35-2, and an eighth boundary line D8 is arranged between the second stepped face 39-2 and the third chamfered portion 35-3. In the example illustrated in FIG. 9, the length of the seventh boundary line D7 is longer than the length of the eighth boundary line D8. Also in the example illustrated in FIG. 9, the length of the fifth boundary line D5 is slightly longer than the length of the sixth boundary line D6.

In the example illustrated in FIG. 9, the tip end portion 31 of the probe 3 includes: the third inclined face 37-3; and the third stepped face 39-3, which connects the third inclined face 37-3 and the central surface 38.

### (Shoulder 2)

In the example illustrated in FIG. 1, the shoulder 2 is disposed between the base end portion 5 of the friction stir welding tool 1A and the probe 3. In the example of FIG. 3, the shoulder 2 includes the shoulder surface 21 to be in contact with the workpiece. The shoulder surface 21 is an end surface on the second direction *DR2* side of the shoulder 2. The shoulder surface 21 flattens the material that is softened by the rotation of the probe 3 (that is, the material that constitutes the workpiece). In the example illustrated in FIG. 3, the shoulder surface 21 is substantially perpendicular to the first axis AX. Alternatively, the shoulder surface 21 may be inclined with respect to the first axis AX.

In the example illustrated in FIG. 3, the shoulder 2 is rotatable about the first axis AX integrally with the probe 3. The shoulder 2 may be integrally formed with the probe 3. Alternatively, the shoulder 2 may be fixed to the probe 3. Furthermore, alternatively, the shoulder 2 may be a fixed shoulder that does not rotate about the first axis AX. In this case, the probe 3 rotates relative to the shoulder 2 about the first axis AX.

In a second modification of the first embodiment, as exemplified in FIG. 16, at least one spiral groove 23 is formed on the shoulder surface 21. In the example illustrated in FIG. 16, such at least one spiral groove 23 is a groove that is farther from the first axis AX in the first rotation direction *R1*.

In the example illustrated in FIG. 16, it is assumed that the shoulder 2 rotates in the first rotation direction *R1* about the first axis AX, in a state in which the workpiece is in contact with the shoulder surface 21. In this case, a part of the material that is softened by the rotation of the probe 3 and the shoulder 2 (that is, the material that constitutes the workpiece) is guided along the at least one spiral groove 23 in a direction approaching the first axis AX. In this manner, the at least one spiral groove 23 supplies the softened material formed from the workpiece toward the probe 3. The softened material supplied by the at least one spiral groove 23 toward the probe 3 is flowed downward by the spiral groove portion 34 of the probe 3, and is flowed in the first rotation direction *R1* by the chamfered portion 35 of the probe 3. In addition, in the tip end portion 31 of the probe 3, the softened material is guided from the chamfered portion 35 to the inclined face 37, and the inclined face 37 guides the softened material downward.

As described heretofore, a smooth flow of the softened material is made by at least one spiral groove 23, the spiral groove portion 34, the chamfered portion 35, and the inclined face 37, and the first material constituting the first workpiece W1 and the second material constituting the second workpiece W2 are smoothly stirred. As a result, the first workpiece W1 and the second workpiece W2 are firmly welded together.

In the example illustrated in FIG. 16, there are two spiral grooves 23, which are formed in the shoulder surface 21. Alternatively, the number of spiral grooves 23 formed in the shoulder surface 21 may be one, or three or more. It is to be noted that the configuration of the spiral groove 23 is adoptable also in the first modification that has been described above or in each modification to be described below.

### (Entire Shape of Probe 3)

In the example illustrated in FIGs. 16 and 17, the probe 3 has a tapered shape. More specifically, in the example illustrated in FIGs. 16 and 17, the entire shape of the probe 3 has a substantially frustoconical shape except for cutout parts of the chamfered portions 35. In other words, the entire shape of the probe 3 has a shape in which the substantially frustoconical shape is cut out by the plurality of chamfered portions 35. In the example illustrated in FIGs. 16 and 17, the outer diameter of the probe 3 decreases toward the tip end. Also in the examples described in FIGs. 16 and 17, each chamfered portion 35 of the probe 3 is made up of a surface that approaches the first axis AX toward the tip end (in other words, in the second direction DR2).

By referring to FIGs. 18 and 19, a third modification of the first embodiment will be described. In the example illustrated in FIGs. 18 and 19, the probe 3 has a tapered shape. More specifically, in the example illustrated in FIGs. 18 and 19, the entire shape of the probe 3 has a substantially frustoconical shape except for the cutout parts of the chamfered portions 35. In other words, the entire shape of the probe 3 has a shape in which the substantially frustoconical shape is cut out by the plurality of chamfered portions 35. In the example illustrated in FIGs. 18 and 19, the outer diameter of the probe 3 decreases toward the tip end. Also in the example illustrated in FIGs. 18 and 19, each chamfered portion 35 of the probe 3 is made up of a plane substantially parallel to the first axis AX.

As exemplified in FIGs. 16 to 19, in a case where the probe 3 has a tapered shape, the insertion resistance when the probe 3 is inserted into the workpiece W is made small.

By referring to FIGs. 20 and 21, a fourth modification of the first embodiment will be described. In the example illustrated in FIGs. 20 and 21, the entire shape of the probe 3 has a substantially cylindrical shape except for the cutout parts of the chamfered portions 35. In other words, the entire shape of the probe 3 has a shape in which the substantially cylindrical shape is cut out by the plurality of chamfered portions 35. Also in the example illustrated in FIGs. 20 and 21, each chamfered portion 35 of the probe 3 is made up of a surface substantially parallel to the first axis AX.

By referring to FIGs. 22 and 23, a fifth modification of the first embodiment will be described. In the example illustrated in FIGs. 22 and 23, the entire shape of the probe 3 has a substantially cylindrical shape except for the cutout parts of the chamfered portions 35. In other words, the entire shape of the probe 3 has a shape in which the substantially cylindrical shape is cut out by the plurality of chamfered portions 35. Also in the example described in FIGs. 22 and 23, each chamfered portion 35 of the probe 3 is made up of a surface that approaches the first axis AX toward the tip end (in other words, in the second direction DR2).

As exemplified in FIGs. 20 to 23, in a case where the thickness of the probe 3 is substantially constant in the direction along the second direction *DR2,* a region to be stirred by the tip end portion 31 of the probe 3 increases, as compared with a case where the probe 3 has a tapered shape. Therefore, in a case where the probe 3 exemplified in FIGs. 20 to 23 is used, friction stirring is more widely performed, and the first workpiece W1 and the second workpiece W2 are more firmly welded together.

### (Workpiece W)

In the example illustrated in FIG. 3, the workpiece W is a workpiece in which the first workpiece W1 is stacked on the second workpiece W2. In the example illustrated in FIG. 3, a lower surface WL of the first workpiece W1 is arranged in contact with an upper surface WU of the second workpiece W2.

The friction stir welding tool 1A according to the first embodiment has the capability that the inclined face 37, which is provided on the end face 310 of the tip end portion 31 of the probe 3, guides the softened material downward. Such a capability is useful, when the upper surface WU of the second workpiece W2 and the lower surface WL of the first workpiece W1 are subjected to friction stir welding. More specifically, the inclined face 37 eliminates or minimizes the second material constituting the second workpiece W2 from flowing locally upward toward the first workpiece W1 around the tip end portion 31 of the probe 3. In this manner, the inclined face 37 prevents, or eliminates or minimizes the formation of the hook portion F, which is exemplified in FIG. 4. As a result, a defect (that is, an unwelded part) is less likely to occur in the interface between the first workpiece W1 and the second workpiece W2.

In the example illustrated in FIG. 3, the first material constituting the first workpiece W1 may be softer than the second material constituting the second workpiece W2, which is arranged below the first workpiece W1. In a case where the first material constituting the first workpiece W1 is softer than the second material constituting the second workpiece W2, the second material constituting the second workpiece W2 easily flows locally upward toward the first workpiece W1 in a region around the tip end portion 31 of the probe 3. However, in the first embodiment, the local flow of the second material in the direction toward the first material is prevented, or eliminated or minimized by the inclined face 37. This effectively prevents, or eliminates or minimizes the formation of the hook portion F, also in a case where the first material is relatively soft.

Any material is applicable to the second material constituting the second workpiece W2, but as an example of the second material, a metallic material such as an aluminum alloy is given as an example. The second workpiece W2 may be a cast product including an aluminum alloy. Any material is applicable to the first material constituting the first workpiece W1, but as an example of the first material, a metallic material softer than the second material is given as an example. The first material may be pure aluminum that is softer than an aluminum alloy. The first workpiece W1 may be a rolled member including aluminum.

In the example illustrated in FIG. 24, the workpiece W is a workpiece in which a side surface of the first workpiece W1 and a side surface of the second workpiece W2 are in contact with each other. In this case, the side surface of the first workpiece W1 and the side surface of the second workpiece W2 are subjected to the friction stir welding by the friction stir welding tool 1A.

In the example illustrated in FIG. 24, the first workpiece W1 and the second workpiece W2 are placed on a workpiece support member 101. In addition, in the example illustrated in FIG. 24, the probe 3 is rotated in the first rotation direction R1 about the first axis AX with the tip end portion 31 of the probe 3 separated from the upper surface of the workpiece support member 101. In this case, the tip end portion 31 of the probe 3 does not reach a region near the workpiece support member 101 (in other words, a region slightly above the workpiece support member 101).

The friction stir welding tool 1A according to the first embodiment includes the inclined face 37, which is provided on the end face 310 of the tip end portion 31 of the probe 3. The inclined face 37 guides the softened material downward, while allowing the softened material to flow in the circumferential direction about the first axis AX. For this reason, the first material constituting the first workpiece W1 and the second material constituting the second workpiece W2 are effectively stirred also in a region between the tip end portion 31 of the probe 3 and the workpiece support member 101. In other words, also in a region slightly above the workpiece support member 101, a welding failure is unlikely to occur between the first workpiece W1 and the second workpiece W2.

### (Second Embodiment)

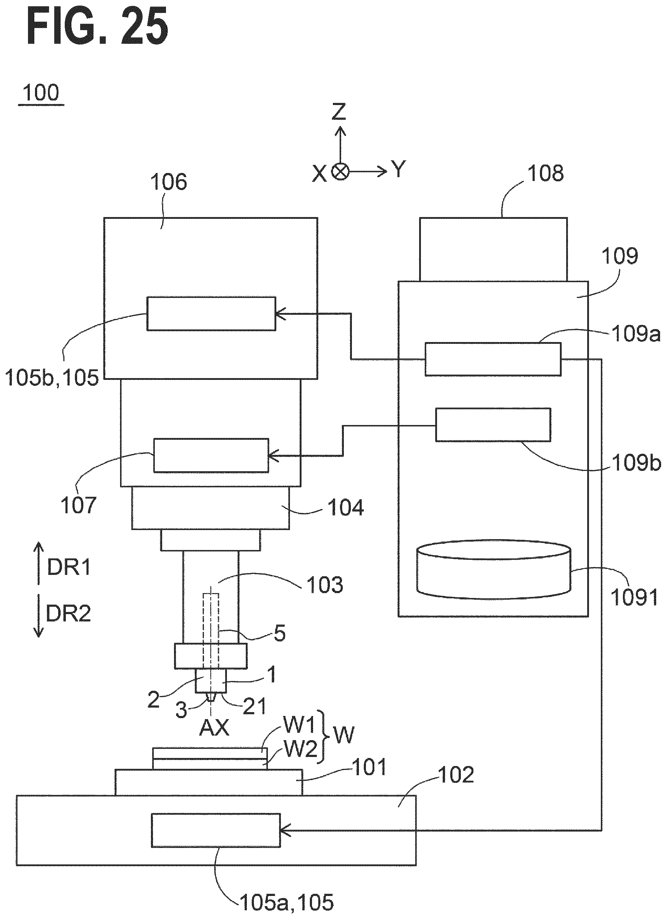

By referring to FIGs. 1 to 25, a friction stir welding apparatus 100 according to a second embodiment will be described. FIG. 25 is a diagram of a friction stir welding apparatus 100 according to the second embodiment, schematically illustrating the friction stir welding apparatus 100.

The friction stir welding apparatus 100 includes: a friction stir welding tool 1A; a workpiece support member 101A; a tool holding member 103, which holds the friction stir welding tool 1; a first drive 105, which moves the tool holding member 103 relative to the workpiece support member 101; a second drive 107, which rotates the probe 3 (or the entire friction stir welding tool 1) about the first axis AX; and a controller 109.

The friction stir welding tool 1 held by the tool holding member 103 is the friction stir welding tool 1A, which has been described in the first embodiment. The friction stir welding tool 1A includes: a base end portion 5 (see FIG. 1, as necessary); a probe 3, which is disposed at a tip end portion; and a shoulder 2, which is disposed between the base end portion 5 and the probe 3. The friction stir welding tool 1A has already been described in the first embodiment (including the respective modifications of the first embodiment), and the repeated description of the friction stir welding tool 1A will be omitted.

The workpiece support member 101 supports a workpiece W, which is an object to be machined (more specifically, an object to be welded). The workpiece support member 101 is, for example, a support table to which the workpiece W is fixed. In an example in FIG. 25, the workpiece W, in which a first workpiece W1 is stacked on a second workpiece W2, is supported by the workpiece support member 101 (support table). In this case, the first workpiece W1 and the second workpiece W2 are overlaid and welded together by the friction stir welding tool 1. More specifically, in the example illustrated in FIG. 25, an upper surface of the second workpiece W2 and a lower surface of the first workpiece W1 are welded together by the friction stir welding tool 1.

Alternatively, a side surface of the first workpiece W1 and a side surface of the second workpiece W2 may be welded together by the friction stir welding tool 1, in a state in which the side surface of the first workpiece W1 and the side surface of the second workpiece W2 are in contact with each other (see FIG. 24, as necessary).

In the example illustrated in FIG. 25, the friction stir welding apparatus 100 includes: a base 102; and a drive 105a (for example, a support table drive), which moves the workpiece support member 101 relative to the base 102. The drive 105a is one of first drives 105, which move the tool holding member 103 relative to the workpiece support member 101.

The tool holding member 103 holds the friction stir welding tool 1. The tool holding member 103 is preferably attachable to and detachable from a frame 104 of the friction stir welding apparatus 100.

In the example illustrated in FIG. 25, the friction stir welding apparatus 100 includes: a second base 106; and a drive 105b, which moves the tool holding member 103 relative to the second base 106. The drive 105b is one of the first drives 105, which move the tool holding member 103 relative to the workpiece support member 101.

The first drive 105 is a device for moving the tool holding member 103 relative to the workpiece support member 101. In the example illustrated in FIG. 25, the first drive 105 includes: the drive 105a, which moves the workpiece support member 101 relative to the base 102; and the drive 105b, which moves the tool holding member 103 relative to the second base 106. Alternatively, the first drive 105 may include only one of the drive 105a and the drive 105b.

In the example illustrated in FIG. 25, the drive 105a is a device for moving the workpiece support member 101 in a direction along a horizontal plane (in other words, a direction along an XY plane).

In the example illustrated in FIG. 25, the drive 105b is a device for moving the tool holding member 103 three-dimensionally. In other words, the drive 105b is capable of moving the tool holding member 103 in a direction along X axis, is capable of moving the tool holding member 103 in a direction along Y axis, and is capable of moving the tool holding member 103 in a direction along Z axis. In the example illustrated in FIG. 25, Z axis is a direction along a vertical direction, and is parallel to the first direction *DR1*.

The second drive 107 drives the probe 3 (or the entire friction stir welding tool 1) to rotate about a first axis AX.

The controller 109 controls the first drive 105 and the second drive 107. In the example illustrated in FIG. 25, the controller 109 includes: a first drive control means 109a, which controls the first drive 105; and a second drive control means 109b, which controls the second drive 107.

When the first drive 105 receives a control signal from the controller 109 (more specifically, the first drive control means 109a), the first drive 105 moves the workpiece support member 101 and/or the tool holding member 103. In other words, when the first drive 105 receives a control signal from the controller 109, the first drive 105 moves the tool holding member 103 relative to the workpiece support member 101.

When the second drive 107 receives a control signal from the controller 109 (more specifically, the second driver control means 109b), the second drive 107 rotates the probe 3 (or the entire friction stir welding tool 1) about the first axis AX.

In the example illustrated in FIG. 25, the controller 109 includes a storage device 1091 (in other words, a memory), which stores programs and data. When the controller 109 executes a program stored in the storage device 1091, the controller 109 functions as the first drive control means 109a and/or the second drive control means 109b, which have been described above.

In the example illustrated in FIG. 25, the friction stir welding apparatus 100 includes an input device 108, which inputs a control parameter or the like into the controller 109.

The friction stir welding apparatus 100 includes a friction stir welding tool 1A according to the first embodiment. Therefore, the friction stir welding apparatus 100 according to the second embodiment is capable of bringing effects similar to those of the friction stir welding tool 1A according to the first embodiment.

The friction stir welding apparatus 100 according to the second embodiment may be a dedicated apparatus specialized for the friction stir welding. Alternatively, the friction stir welding apparatus 100 according to the second embodiment may be made up of a part of a compound processing machine capable of performing a cutting process or the like.

### (Friction Stir Welding Method)

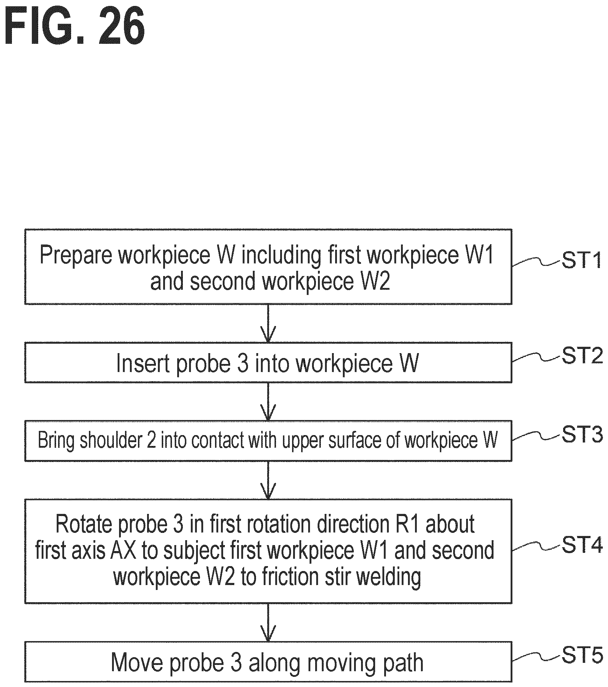

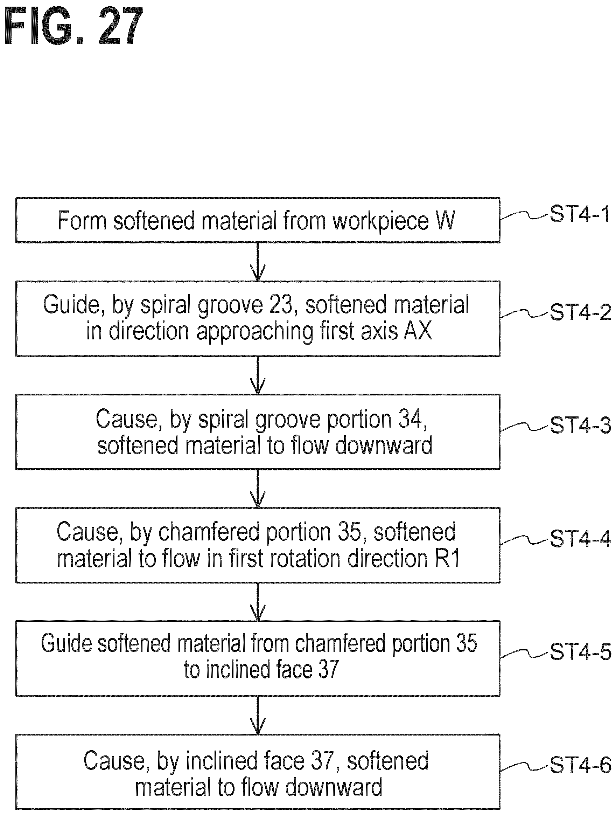

By referring to FIGs. 1 to 27, a friction stir welding method according to an embodiment will be described. FIG. 26 is a flowchart of an example of a friction stir welding method according to an embodiment. FIG. 27 is a flowchart of an example of a plurality of sub-steps included in a welding step.

The friction stir welding tool 1, which is used in the friction stir welding method according to an embodiment, may be the friction stir welding tool 1A according to the first embodiment or another friction stir welding tool. In addition, the friction stir welding method according to an embodiment may be performed using the friction stir welding apparatus 100 according to the second embodiment or another friction stir welding apparatus. The respective components of the friction stir welding tool 1 and the respective components of the friction stir welding apparatus 100 have been described in the first embodiment and the second embodiment. Therefore, the repeated description of the respective components of the friction stir welding tool 1 and the respective components of the friction stir welding apparatus 100 will be omitted.

In a first step ST1, a workpiece W including a first workpiece W1 and a second workpiece W2 is prepared. The first step ST1 is a preparing step. The first material constituting the first workpiece W1 is, for example, a material different from the second material constituting the second workpiece W2. The first material constituting the first workpiece W1 may be softer than the second material constituting the second workpiece W2. Alternatively, the hardness of the first material constituting the first workpiece W1 and the hardness of the second material constituting the second workpiece W2 may be substantially equal to each other.

In a case where overlay welding of the first workpiece W1 and the second workpiece W2 (hereinafter, simply referred to as "overlay welding"), the workpiece W in which the first workpiece W1 is stacked on the second workpiece W2 (in other words, the workpiece W in which the lower surface of the first workpiece W1 is in contact with the upper surface of the second workpiece W2) is prepared in the preparing step (see FIG. 25). It is to be noted that the area of the lower surface of the first workpiece W1 may be equal to the area of the upper surface of the second workpiece W2, or may be different from the area of the upper surface of the second workpiece W2.

Alternatively, in a case where butt welding of the first workpiece W1 and the second workpiece W2 (hereinafter, simply referred to as "butt welding"), the workpiece W, in which a side surface of the first workpiece W1 and a side surface the second workpiece W2 are in contact with each other, is prepared in the preparing step.

In a second step ST2, the probe 3 of the friction stir welding tool 1 is inserted into the workpiece W. The second step ST2 is an inserting step. In the inserting step, the friction stir welding tool 1 is moved relative to the workpiece W, and the probe 3 is inserted into the workpiece W. The inserting step is performed, while the probe 3 is rotating about the first axis AX.

In the example illustrated in FIG. 3 (an example in which the overlay welding is performed), the inserting step includes inserting the probe 3 into the first workpiece W1. In the example illustrated in FIG. 3, after the inserting step is performed, the tip end portion 31 of the probe 3 reaches the upper surface WU of the second workpiece W2, which is arranged below the first workpiece W1. In other words, after the inserting step is performed, at least a part of the end face 310 of the tip end portion 31 of the probe 3 traverses an interface BP between the first workpiece W1 and the second workpiece W2, and enters the second workpiece W2.

In the example illustrated in FIG. 3, after the inserting step is performed (or while a welding step to be described below is being performed), an upper end portion of the inclined face 37, which is formed on the end face 310 of the tip end portion 31 of the probe 3, is located above the interface BP between the first workpiece W1 and the second workpiece W2, and a lower end portion of the inclined face 37 is located below the interface BP between the first workpiece W1 and the second workpiece W2. In this case, when the probe 3 is rotated in the first rotation direction *R1* about the first axis AX, the inclined face 37 directly and effectively contributes to mixing of the first softened material formed from the first workpiece W1 and the second softened material formed from the second workpiece W2.

It is to be noted that after the inserting step is performed, the tip end portion 31 of the probe 3 may not necessarily have to reach the upper surface WU of the second workpiece W2, which is arranged below the first workpiece W1. In other words, with regard to the arrangement relationship between the second workpiece W2 and the tip end portion 31 of the probe 3, it is sufficient if the frictional heat generated by the relative movement between the probe 3 and the first workpiece W1 reaches the second workpiece W2, and the tip end portion 31 of the probe 3 may not necessarily have to reach the second workpiece W2.

In the example illustrated in FIG. 24 (an example in which the butt welding is performed), the inserting step includes inserting the probe 3 into an interface part between the first workpiece W1 and the second workpiece W2.

In a third step ST3, the shoulder 2 of the friction stir welding tool 1 contacts the upper surface of the workpiece W. The third step ST3 is a contacting step. In the contacting step, the friction stir welding tool 1 is moved relative to the workpiece W, and the shoulder 2 is brought into contact with the upper surface of the workpiece W. The contacting step is performed, while the probe 3 is rotating about the first axis AX.

The contacting step (the third step ST3) and the inserting step (the second step ST2) are performed continuously. More specifically, the friction stir welding tool 1 is moved relative to the workpiece W, the probe 3 is inserted into the workpiece W, and the shoulder 2 is also brought into contact with the upper surface of the workpiece W.

In the example illustrated in FIG. 3 (the example in which the overlay welding is performed), the contacting step includes bringing the shoulder surface 21 of the shoulder 2 into contact with the upper surface of the first workpiece W1.

In the example illustrated in FIG. 24 (the example in which the butt welding is performed), the contacting step includes bringing the shoulder surface 21 of the shoulder 2 into contact with both the upper surface of the first workpiece W1 and the upper surface of the second workpiece W2.

In a fourth step ST4, the first workpiece W1 and the second workpiece W2 are subjected to the friction stir welding. The fourth step ST4 is a welding step. As exemplified in FIG. 3 or FIG. 24, in the welding step, the probe 3, which has been inserted into the workpiece W, is rotated in the first rotation direction *R1* about the first axis AX, and the first workpiece W1 and the second workpiece W2 are subjected to the friction stir welding. In addition, in the welding step, the shoulder 2 in contact with the upper surface of the workpiece W is rotated in the first rotation direction *R1* about the first axis AX. Alternatively, in a case where the shoulder 2 is a fixed shoulder, the shoulder 2 is not rotated about the first axis AX in the welding step.

In the example illustrated in FIG. 3 (the example in which the overlay welding is performed), the welding step includes rotating the probe 3 in the first rotation direction *R1* about the first axis AX with respect to the workpiece W, which is in a state in which the lower surface WL of the first workpiece W1 is in contact with the upper surface WU of the second workpiece W2.

On the other hand, in the example illustrated in FIG. 24 (the example in which the butt welding is performed), the welding step includes rotating the probe 3 in the first rotation direction *R1* about the first axis AX with respect to the workpiece W, in which a side surface of the first workpiece W1 and a side surface of the second workpiece W2 are in contact with each other.

A plurality of sub-steps of the welding step will be described.

In a sub-step ST4-1, a softened material is formed from the workpiece. The sub-step ST4-1 is a softened material forming step. In the softened material forming step, the softened material is formed from the workpiece W by the frictional heat generated by the relative rotation between the probe 3 and the workpiece W.

In the example illustrated in FIG. 3 (the example in which the overlay welding is performed), in the sub-step ST4-1, a first softened material M1 is formed from the first workpiece W1 by the frictional heat generated by the relative rotation between the probe 3 and the first workpiece W1.

In the example illustrated in FIG. 24 (the example in which the butt welding is performed), in the sub-step ST4-1, the first softened material M1 is formed from the first workpiece W1 by the frictional heat generated by relative rotation between the probe 3 and the first workpiece W1, and a second softened material M2 is formed from the second workpiece W2 by the frictional heat generated by relative rotation between the probe 3 and the second workpiece W2.

In a sub-step ST4-2, the shoulder 2 is rotated in the first rotation direction *R1* about the first axis AX, at least one spiral groove 23 (if necessary, see FIG. 16) formed on the shoulder surface 21 of the shoulder 2 guides the softened material formed from the workpiece W in a direction approaching the first axis AX.

In the example illustrated in FIG. 3 (the example in which the overlay welding is performed), in the sub-step ST4-2, the shoulder 2 is rotated in the first rotation direction *R1* about the first axis AX, and then at least one spiral groove 23 (if necessary, see FIG. 16), which is formed on the shoulder surface 21 of the shoulder 2, guides the first softened material formed from the first workpiece W1 in the direction approaching the first axis AX.

In the example illustrated in FIG. 24 (the example in which the butt welding is performed), in the sub-step ST4-2, the shoulder 2 is rotated in the first rotation direction *R1* about the first axis AX, at least one spiral groove 23 (if necessary, see FIG. 16) formed on the shoulder surface 21 of the shoulder 2 guides the first softened material formed from the first workpiece W1 in the direction approaching the first axis AX, and such at least one spiral groove 23 guides the second softened material formed from the second workpiece W2 in the direction approaching the first axis AX.

It is to be noted that in a case where the spiral groove 23 is not formed on the shoulder surface 21, or in a case where the shoulder 2 is a fixed shoulder that does not rotate about the first axis AX, the sub-step ST4-2 is omitted.

In a sub-step ST4-3, the probe 3 is rotated in the first rotation direction *R1* about the first axis AX, and the plurality of grooves V of the spiral groove portion 34, which is formed on the outer circumferential surface 33s of the probe 3, cause the softened material formed from the workpiece W to flow downward.

In the example illustrated in FIG. 3 (the example in which the overlay welding is performed), in the sub-step ST4-3, the probe 3 is rotated in the first rotation direction *R1* about the first axis AX, and the plurality of grooves V of the spiral groove portion 34, which is formed on the outer circumferential surface 33s of the probe 3, cause the first softened material M1, which is formed from the first workpiece W1, to flow downward.

In the example illustrated in FIG. 24 (the example in which the butt welding is performed), in the sub-step ST4-3, the probe 3 is rotated in the first rotation direction *R1* about the first axis AX, and the plurality of grooves V of the spiral groove portion 34, which is formed on the outer circumferential surface 33s of the probe 3, cause the first softened material M1, which is formed from the first workpiece W1, to flow downward, and the plurality of grooves V of the spiral groove portion 34 cause the second softened material M2, which is formed from the second workpiece W2, to flow downward.

In a sub-step ST4-4, the probe 3 is rotated in the first rotation direction *R1* about the first axis AX, and the chamfered portion 35, which is formed on the outer circumferential surface 33s of the probe 3, causes the softened material formed from the workpiece W to flow in the first rotation direction *R1* about the first axis AX.

In the example illustrated in FIG. 3 (the example in which the overlay welding is performed), in the sub-step ST4-4, the probe 3 is rotated in the first rotation direction *R1* about the first axis AX, and the chamfered portion 35, which is formed on the outer circumferential surface 33s of the probe 3, causes the first softened material formed from the first workpiece W1 to flow in the first rotation direction *R1* about the first axis AX.

In the example illustrated in FIG. 24 (the example in which the butt welding is performed), in the sub-step ST4-4, the probe 3 is rotated in the first rotation direction *R1* about the first axis AX, and the chamfered portion 35, which is formed on the outer circumferential surface 33s of the probe 3, causes the first softened material formed from the first workpiece W1 to flow in the first rotation direction *R1* about the first axis AX, and the chamfered portion 35 causes the second softened material formed from the second workpiece W2 to flow in the first rotation direction *R1* about the first axis AX.

In addition, in the example illustrated in FIG. 24 (the example in which the butt welding is performed), the chamfered portion 35 causes the first softened material M1 and the second softened material M2 to flow in the first rotation direction *R1* about the first axis AX, and the first softened material M1 and the second softened material M2 are mixed together in a region around the probe 3. In this manner, in the region around the probe 3, a mixed softened material in which the first softened material M1 and the second softened material M2 are mixed together is formed.

In a sub-step ST4-5, the probe 3 is rotated in the first rotation direction *R1* about the first axis AX, and the softened material formed from the workpiece W is guided from the chamfered portion 35 to the inclined face 37, which is formed in a part of the end face 310 of the tip end portion 31 of the probe 3.

In the example illustrated in FIG. 3 (the example in which the overlay welding is performed), in the sub-step ST4-5, the probe 3 is rotated in the first rotation direction *R1* about the first axis AX, and the first softened material formed from the first workpiece W1 is guided from the chamfered portion 35 to the inclined face 37, which is formed in a part of the end face 310 of the tip end portion 31 of the probe 3 (see the arrow AR1 in FIG. 3).

In the example illustrated in FIG. 24 (the example in which the butt welding is performed), in the sub-step ST4-5, the probe 3 is rotated in the first rotation direction *R1* about the first axis AX, and the mixed softened material in which the first softened material M1 and the second softened material M2 are mixed together is guided from the chamfered portion 35 to the inclined face 37, which has been described above.

In a sub-step ST4-6, the probe 3 is rotated in the first rotation direction *R1* about the first axis AX, and the inclined face 37, which is formed on the end face 310 of the tip end portion 31 of the probe 3, causes the softened material formed from the workpiece W to flow downward.

In the example illustrated in FIG. 3 (the example in which the overlay welding is performed), in the sub-step ST4-6, the probe 3 is rotated in the first rotation direction *R1* about the first axis AX, and the inclined face 37, which is formed on the end face 310 of the tip end portion 31 of the probe 3, causes the first softened material formed from the first workpiece W1 to flow downward (see the arrow AR2 in FIG. 3). More specifically, the inclined face 37, which has been described above, causes the first softened material formed from the first workpiece W1 to flow downward toward the second workpiece W2, which is arranged below the first workpiece W1.

It is to be noted that in the sub-step ST4-6, the inclined face 37, which has been described above, may guide the first softened material formed from the first workpiece W1 partially from one chamfered portion (for example, the first chamfered portion 35-1) to another chamfered portion (for example, the second chamfered portion 35-2) (see the arrow AR3 in FIG. 3).

In the example illustrated in FIG. 24 (the example in which the butt welding is performed), in the sub-step ST4-6, the probe 3 is rotated in the first rotation direction R1 about the first axis AX, and the inclined face 37, which is formed on the end face 310 of the tip end portion 31 of the probe 3, causes the mixed softened material in which the first softened material M1 and the second softened material M2 are mixed together to flow downward.

It is to be noted that in the sub-step ST4-6, the inclined face 37, which has been described above, may guide the mixed softened material, in which the first softened material M1 and the second softened material M2 are mixed together, partially from one chamfered portion (for example, the first chamfered portion 35-1) to another chamfered portion (for example, the second chamfered portion 35-2) (see the arrow AR3 in FIG. 24).

By performing the sub-steps ST4-1 to ST4-6, which have been described above, the first softened material formed from the first workpiece W1 and the second softened material formed from the second workpiece W2 are mixed together, and the first workpiece W1 and the second workpiece W2 are subjected to the friction stir welding.

In the example illustrated in FIG. 3 (the example in which the overlay welding is performed), the friction stir welding method includes mixing the first softened material M1, which is caused to flow downward by the inclined face 37 in the sub-step ST4-6, with the second softened material M2, which is formed from the second workpiece W2 below the end face 310 of the tip end portion 31 of the probe 3. The first softened material M1 is caused to flow downward by the inclined face 37 (see the arrow AR2 in FIG. 3). This satisfactorily mixes the first softened material M1 with the second softened material M2 in a region below the end face 310. Therefore, the formation of the hook portion F, which is illustrated in FIG. 4, is prevented, or eliminated or minimized.

In the example illustrated in FIG. 24 (the example in which the butt welding is performed), the friction stir welding method includes causing the mixed softened material in which the first softened material M1 and the second softened material M2 are mixed together to flow downward by the inclined face 37. In this case, the first workpiece W1 and the second workpiece W2 are frictionally stirred satisfactorily also in a region between the inclined face 37 and the workpiece support member 101. Therefore, also in a region slightly above the workpiece support member 101, a welding failure is unlikely to occur between the first workpiece W1 and the second workpiece W2.

It is to be noted that in the above-described sub-steps ST4-1 to ST4-6 are performed simultaneously.

In a fifth step ST5, the probe 3 is moved along a moving path in a state in which the shoulder surface 21 of the shoulder 2 is in contact with the upper surface of the workpiece W. The fifth step ST5 is a moving step. The moving step is performed, while the probe 3 is rotating about the first axis AX. In other words, the moving step (the fifth step ST5) is performed simultaneously with the welding step (the fourth step ST4).

In the example illustrated in FIG. 3 (the example in which the overlay welding is performed), in the moving step, the probe 3 is moved in a direction parallel to the interface BP between the first workpiece W1 and the second workpiece W2, in a state in which the shoulder surface 21 of the shoulder 2 is in contact with the upper surface of the first workpiece W1.

In the example illustrated in FIG. 24 (the example in which the butt welding is performed), in the moving step, the probe 3 is moved along the interface between the first workpiece W1 and the second workpiece W2, in a state in which the shoulder surface 21 of the shoulder 2 is in contact with both the upper surface of the first workpiece W1 and the upper surface of the second workpiece W2.

By performing the moving step, a welded region between the first workpiece W1 and the second workpiece W2 is formed along the moving path of the friction stir welding tool 1.

The present invention will not be limited to the above-described and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1, 1A ... Friction stir welding tool, 2 ... Shoulder, 3 ... Probe, 5 ... Base end portion of friction stir welding tool, 21 ... Shoulder surface, 23 ... Spiral groove, 31 ... Tip end portion of probe, 32 ... Base end portion of probe, 33s ... Outer circumferential surface, 34 ... Spiral groove portion, 34-1 ... First spiral groove portion, 34-2 ... Second spiral groove portion, 34-3 ... Third spiral groove portion, 35 ... Chamfered portion, 35-1 ... First chamfered portion, 35-2 ... Second chamfered portion, 35-3 ... Third chamfered portion, 37 ... Inclined face, 37-1 ... First inclined face, 37-2 ... Second inclined face, 37-3 ... Third inclined face, 37a-1 ... First end portion of first inclined face, 37a-2 ... First end portion of second inclined face, 37a-3 ... First end portion of third inclined face, 37b-1 ... Second end portion of first inclined face, 37b-2 ... Second end portion of second inclined face, 37b-3 ... Second end portion of third inclined face, 37n ... Inner side edge, 37n-1 ... Inner side edge of first inclined face, 37n-2 ... Inner side edge of second inclined face, 37n-3 ... Inner side edge of third inclined face, 37u ... Outer side edge, 37u-1 ... First outer side edge, 37u-2 ... Second outer side edge, 37u-3... Third outer side edge, 38 ... Central surface, 38u ... Outer edge portion, 38u-1 ... First outer edge portion, 38u-2 ... Second outer edge portion, 38u-3 ... Third outer edge portion, 39 ... Stepped face, 39-1 ... First Stepped face, 39-2 ... Second stepped face, 39-3 ... Third stepped face, 50t ... Outer circumferential surface, 51t ... First surface, 52t ... Second surface, 100 ... Friction stir welding apparatus, 101 ... Workpiece support member, 102 ... Base, 103 ... Tool holding member, 104 ... Frame, 105 ... First drive, 105a ... Drive, 105b ... Drive, 106 ... Second base, 107 ... Second drive, 108 ... Input device, 109 ... Controller, 109a ... First drive control means, 109b ... Second drive control means, 310 ... End face, 1091 ... Storage device, F ... Fook portion, V ... Groove, V1 ... First groove, V2 ... Second groove, V3 ... Third groove, W ... Workpiece, W1 ... First workpiece, W2 ... Second workpiece, WL ... Lower surface of workpiece, WU ... Upper surface of workpiece

## Claims

1. A friction stir welding tool comprising:
a shoulder including a shoulder surface to be in contact with a workpiece; and
a probe that protrudes from the shoulder and that is rotatable about a first axis,
wherein on an outer circumferential surface of the probe, a spiral groove portion and a chamfered portion are alternately formed in a circumferential direction of the probe,
wherein in a case where a rotation direction of the probe is defined as a first rotation direction, the spiral groove portion includes a plurality of grooves that approach the shoulder surface in the first rotation direction, and
wherein an inclined face is formed on a part of an end face of a tip end portion of the probe, the inclined face being continuous with the chamfered portion and approaching the shoulder surface in the first rotation direction.

2. The friction stir welding tool according to claim 1,
wherein the end face of the tip end portion of the probe includes a central surface through which the first axis passes.

3. The friction stir welding tool according to claim 2,
wherein the inclined face is connected through a stepped face with an outer edge portion of the central surface.

4. The friction stir welding tool according to one of claims 1 to 3,
wherein the chamfered portion comprises: a first chamfered portion; and a second chamfered portion,
wherein the inclined face comprises a first inclined face, and
wherein a first end portion of the first inclined face is continuous with the first chamfered portion, and a second end portion of the first inclined face is continuous with the second chamfered portion.

5. The friction stir welding tool according to claim 4,
wherein the spiral groove portion comprises a first spiral groove portion, and
wherein in a side view, the first spiral groove portion is disposed in an inner region having a letter U shape defined by the first chamfered portion, the first inclined portion, and the second chamfered portion.

6. The friction stir welding tool according to one of claims 1 to 5,
wherein the inclined portion has an inclination angle equal to or greater than 1 degree and equal to or smaller than 30 degrees with respect to a plane perpendicular to the first axis.

7. The friction stir welding tool according to one of claims 1 to 6, wherein
in a case where a direction from the tip end portion of the probe toward a base end portion of the probe is defined as a first direction,
an outer side edge of the inclined face overlaps the spiral groove portion, when viewed in a direction along the first direction, and
a distance between an inner side edge of the inclined face and the first axis is shorter than a distance between an innermost edge of the spiral groove portion and the first axis.

8. The friction stir welding tool according to one of claims 1 to 7,
wherein at least one spiral groove is formed on the shoulder surface, the at least one spiral groove being farther from the first axis in the first rotation direction.

9. The friction stir welding tool according to claim 2 or 3,
wherein the end face of the tip end portion of the probe comprises: three inclined faces; and the central surface,
wherein when viewed in a direction along the first axis, the end face of the tip end portion of the probe has a substantially triangular shape,
wherein when viewed in the direction along the first axis, the central surface has a substantially hexagonal shape,
wherein when viewed in the direction along the first axis, three sides of the substantially hexagonal shape respectively define boundaries between the central surface and said three inclined faces, and
wherein when viewed in the direction along the first axis, the other three sides of the substantially hexagonal shape respectively define boundaries between the central surface and three chamfered portions.

10. The friction stir welding tool according to claim 1,
wherein the chamfered portion comprises: a first chamfered portion; and a second chamfered portion,
wherein the inclined face comprises a first inclined face,
wherein the tip end portion of the probe comprises:
a central surface through which the first axis passes; and
a first stepped face that connects the first inclined face and the central surface, and
wherein the first stepped face is in contact with each of the first inclined face, the central surface, the first chamfered portion, and the second chamfered portion.

11. A friction stir welding apparatus comprising:
a friction stir welding tool;
a workpiece support member configured to support a workpiece;
a tool holding member configured to hold the friction stir welding tool;
a first drive configured to move the tool holding member relative to the workpiece support member;
a second drive configured to drive a probe of the friction stir welding tool to rotate about a first axis; and
a controller configured to control the first drive and the second drive,
wherein the friction stir welding tool comprises:
a shoulder including a shoulder surface to be in contact with the workpiece; and
the probe that protrudes from the shoulder and that is rotatable about the first axis,
wherein on an outer circumferential surface of the probe, a spiral groove portion and a chamfered portion are alternately formed in a circumferential direction of the probe,
wherein in a case where a rotation direction of the probe is defined as a first rotation direction, the spiral groove portion includes a plurality of grooves that approach the shoulder surface in the first rotation direction, and
wherein an inclined face is formed on a part of an end face of a tip end portion of the probe, the inclined face being continuous with the chamfered portion and approaching the shoulder surface in the first rotation direction.

12. A friction stir welding method comprising:
a step of preparing a workpiece including a first workpiece and a second workpiece;
a step of inserting a probe of a friction stir welding tool into the workpiece, by moving the friction stir welding tool relative to the workpiece;
a step of bringing a shoulder of the friction stir welding tool into contact with an upper surface of the workpiece, by moving the friction stir welding tool relative to the workpiece; and
a step of subjecting the first workpiece and the second workpiece to friction stir welding, by rotating the probe inserted into the workpiece in a first rotation direction about a first axis,
wherein the step of subjecting the first workpiece and the second workpiece to the friction stir welding comprises:
forming a softened material from the workpiece with frictional heat generated by relative rotation between the probe and the workpiece;
causing, by a plurality of grooves of a spiral groove portion formed on an outer circumferential surface of the probe, the softened material to flow downward;
causing, by a chamfered portion formed on the outer circumferential surface of the probe, the softened material to flow in the first rotation direction about the first axis;
guiding the softened material from the chamfered portion to an inclined face formed in a part of an end face of a tip end portion of the probe; and
causing, by the inclined face, the softened material to flow downward.

13. The friction stir welding method according to claim 12,
wherein the step of preparing the workpiece includes preparing the workpiece in which a lower surface of the first workpiece is in contact with an upper surface of the second workpiece,
wherein the step of subjecting the first workpiece and the second workpiece to the friction stir welding comprises:
forming a first softened material from the first workpiece with the frictional heat generated by the relative rotation between the probe and the first workpiece;
causing, by the plurality of grooves of the spiral groove portion, the first softened material to flow downward;
causing, by the chamfered portion, the first softened material to flow in the first rotation direction about the first axis;
guiding the first softened material from the chamfered portion to the inclined face;
causing, by the inclined face, the first softened material to flow downward toward the second workpiece arranged below the first workpiece; and
mixing the first softened material that has been flowed downward by the inclined face with a second softened material formed from the second workpiece below the end face of the tip end portion of the probe.

14. The friction stir welding method according to claim 13,
wherein after the step of inserting the probe of the friction stir welding tool into the workpiece, an upper end portion of the inclined face is located above an interface between the first workpiece and the second workpiece, and a lower end portion of the inclined face is located below the interface.

15. The friction stir welding method according to claim 12,
wherein the step of preparing the workpiece includes preparing the workpiece in which a side surface of the first workpiece is in contact with a side surface of the second workpiece,
wherein the step of subjecting the first workpiece and the second workpiece to the friction stir welding comprises:
forming a first softened material from the first workpiece with the frictional heat generated by the relative rotation between the probe and the first workpiece, and forming a second softened material from the second workpiece with the frictional heat generated by the relative rotation between the probe and the second workpiece;
causing, by the plurality of grooves of the spiral groove portion, the first softened material and the second softened material to flow downward;
causing, by the chamfered portion, the first softened material and the second softened material to flow in the first rotation direction about the first axis;
forming, in a region around the probe, a mixed softened material in which the first softened material and the second softened material are mixed together;
guiding the mixed softened material from the chamfered portion to the inclined face; and
causing, by the inclined face, the mixed softened material to flow downward.
